(19)

Europäisches
Patentamt
European
Patent Office
Office européen
des brevets

(11) **EP 4 382 241 A1**

(12) **EUROPEAN PATENT APPLICATION**

(43) Date of publication:
**12.06.2024 Bulletin 2024/24**

(21) Application number: **22212542.9**

(22) Date of filing: **09.12.2022**

(51) International Patent Classification (IPC):
**B23K 26/0622** *(2014.01)*    **B23K 26/364** *(2014.01)*
**C21D 8/12** *(2006.01)*    **H01F 1/16** *(2006.01)*
**C21D 6/00** *(2006.01)*    **C21D 9/46** *(2006.01)*

(52) Cooperative Patent Classification (CPC):
**B23K 26/0624; B23K 26/364; C21D 6/008;**
**C21D 8/1261; C21D 8/1272; C21D 8/1294;**
**C21D 9/46; H01F 1/16**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(71) Applicants:
- **Institut Polytechnique Unilasalle**
  **60026 Beauvais Cedex (FR)**
- **Université de Picardie Jules Verne**
  **80025 Amiens Cedex 1 (FR)**
- **Lasea Belgium**
  **4102 Seraing (BE)**
- **Institut de Recherche Technologique Matériaux,**
  **Métallurgie, Procédés**
  **57070 Metz (FR)**
- **Multitel ASBL**
  **7000 Mons (BE)**
- **Jeumont Electric**
  **59572 Jeumont (FR)**
- **Universidad Carlos III de Madrid**
  **28919 Leganés - Madrid (ES)**
- **Fraunhofer-Institut für Produktionstechnologie**
  **IPT**
  **52074 Aachen (DE)**

(72) Inventors:
- **PINEAU, Camille**
  **57070 METZ (FR)**
- **BIRAT, Jean-Pierre**
  **52280 SEMECOURT (FR)**

- **DUPONT, Prescillia**
  **80830 L'ETOILE (FR)**
- **PLOYARD, Maxime**
  **59144 GOMMEGNIES (FR)**
- **HENROTTIN, Anne**
  **4920 Sougné-Remouchamps (BE)**
- **PATARS, Jérôme**
  **4550 Nandrin (BE)**
- **DECULTOT, Marc**
  **4100 Seraing (BE)**
- **DUPUY, Julien**
  **6238 LUTTRE (BE)**
- **HERNANDEZ, Yves**
  **59570 Taisnieres-sur-Hon (FR)**
- **MIAZEK, Alexandre**
  **7000 MONS (BE)**
- **VELASCO LOPEZ, Fransisco Javier**
  **28034 MADRID (ES)**
- **MALOBERTI, Olivier**
  **60600 Agnetz (FR)**
- **PANIER, Stéphane**
  **62000 ARRAS (FR)**
- **NESSER, Manar**
  **80000 AMIENS (FR)**
- **ZECHEL, Fabian**
  **52068 AACHEN (DE)**

(74) Representative: **Fidal Innovation**
**4-6 avenue d'Alsace**
**92400 Courbevoie (FR)**

(54) **PROCESS FOR MANUFACTURING AN ELECTRICAL STEEL AND ELECTRICAL STEEL**

(57)    A process for manufacturing an electrical steel sheet, the process comprising :

a- providing a sheet of laminated electrical steel having a first and a second surface, a rolling direction or at least one easy magnetization direction(s), and a characteristic time for heat diffusion;

b- forming a plurality of grooves on at least one of the first and second surfaces with at least one pass of a pulsed laser, each pass being associated with a scanning direction, the laser having a laser pulse repetition frequency, a pulse duration and emitting a light at a laser wavelength with a peak power density and a cumulative energy density per pass, the process being characterised in that :

i) the laser pulse duration is equal to or less than a heat diffusion characteristic time of the electrical steel;

ii) the peak power density is more than 50 TW/cm$^2$ or/and the product between the peak power density and the pulse repetition frequency is more than 5000 TW/cm$^2$/ms.

iii) the cumulative energy density per laser pass is comprised between 10 J/cm$^2$ and 3500 J/cm$^2$.

EP 4 382 241 A1

Fig. 4b

SPL IRRADIATION-SCRIBING vs USPL ABLATION

PPD=$p_{peak}$ (MW/cm$^2$)

PED=$e_{pulse}$ (J/cm$^2$)

IRR

SCR

ABL

5 TW/cm$^2$

50 TW/cm$^2$

● LPL IRRADIATION
■ SPL SCRIBING
◆ USPL ABLATION 500 fs
◆ USPL ABLATION 300 fs
◆ USPL ABLATION 100 fs

## Description

### FIELD OF THE INVENTION

The present invention relates to the field of electrical steels. More specifically, the invention relates to a process for manufacturing an electrical or magnetic steel or a ferromagnetic alloy having heat-resistant refined (or energized or/and partly orientable) magnetic domains and to such an electrical/magnetic steel or such a ferromagnetic alloy.

### TECHNOLOGICAL BACKGROUND

Numerous electrical and magnetic components, such as electrical machines, actuators, inductors, transformers or sensors, comprise magnetic circuits that are made of electrical steel sheets, plates or strips with various shapes.
An electrical steel is an iron alloy tailored to produce specific magnetic properties.
The majority of electrical steels are based on Silicon Iron alloy, comprising either non oriented grains (NOES, Non Grain Oriented Electrical Steels ) or oriented grains (GOES Grain Oriented Electrical Steels) such as conventional GOES or HiB GOES (i.e with high permeability).
Some soft magnetic alloys are made of iron (Fe) with nickel (Ni) or/and cobalt (Co) with various grades depending on the compounds balance between Fe and Ni or Fe and Co.
At the microscopic scale, any kind of electrical steel adopts a magnetic structure comprising "magnetic domains" or "Weiss domains" separated by "walls".
All the magnetic moments of the atoms of a given magnetic domain are aligned. Two consecutive magnetic domains have different magnetic polarization. A wall is the thin transition zone where the magnetic polarization rotates from one domain to the neighboring one.
The size and the orientation of the magnetic domains are mainly governed by five different magnetic interaction energies :

- the magneto-crystalline energy,
- the exchange energy,
- the demagnetizing energy (or equivalently stray field energy),
- the magneto-elastic energy,
- and the magnetostriction energy.

The domains can evolve due to several reversal magnetization / demagnetization mechanisms linked to one or more of these magnetic interactions energies including the Domain Walls Displacement (DWD), the Domains Magnetization Rotation (DMR), the Domain Walls Bowing (DWB), the Domain Walls Multiplication (DWM), the Domain Walls Fusion (DWF) and the domain walls nucleation (DWN).
When an electrical or magnetic component is operated, the electrical steel is submitted to alternating fields at various frequencies from 1 up to 100 kHz and undergoes one or more of these magnetization/demagnetization mechanisms depending on the experimental conditions, which can induce both losses and vibration.
Firstly, regarding the Domain Walls Displacement (DWD), microscopic eddy currents are induced around the walls in motion. At very low frequencies, the walls jump from one pining center to another. The corresponding microscopic eddy currents contribute the so called quasi static hysteresis losses. In dynamic or transient working conditions, microscopic eddy currents induced around walls are responsible for extra iron losses that are inversely proportional to the walls surface, mobility, and density.
Secondly, when the DWD is not possible anymore, the polarization inside the domains rotates towards the magnetic field direction (DMR phenomenon). Therefore, eddy currents are also induced within the magnetic domains. Part of these currents loops contributes to the extra losses. This loss contribution is proportional to the size of domains. The other part of these current loops recombine in classical like current loops and contributes to the classical eddy current losses, that are proportional to the grain size and sheet thickness.
Thirdly, at high induction, close to saturation, the domain wall fusion (DWF) takes place : the domain walls are merged, which increases the contribution to the losses due to DWD and DMR. On the other hand, some of the reversal mechanisms can contribute to the reduction of losses. For example, the domain walls bowing (DWB) which occurs for high flux density variations can reduce the contributions due to DWD. If the DWB is strong enough, it can result in the breaking and multiplication of walls, which in turns reduces the losses due to DWD.
One understands that the control of the different magnetization/demagnetization phenomenon in an electrical steel is crucial in order to achieve reduction of the losses and vibrations.
In order to reduce iron losses due to classical eddy currents related to classical losses and the DMR process, it is well known to use stacks of laminated electrical steel sheets rather than bulk material, and to insulate the sheets with a coating.

In grain-oriented steel sheets essentially (or textured materials), the losses are also correlated with the magnetic structure which consists mainly of long magnetic domains elongated parallel the rolling direction (RD) (or easy magnetization direction (EM)), perpendicular to (TD) (or a hard magnetization direction (HM)), and delimited by very mobile 180° walls. As a consequence, an efficient method for further reducing of losses of electrical steels is a surface laser treatment for refining the magnetic structure, that is to say to increase the number of domains at 180° walls so as to reduce the size of the magnetic domains.

The main reason for the use of a surface laser treatment of each lamination is the domains size reduction, classically called domains refinement effect. Thanks to this surface treatment, it is possible to act, at the spot locations or in between two spots, on:

- The magneto-elastic energy and laser induced local anisotropy through a mechanical or thermal stress at the vicinity of the laser spots, which is in favor of closure domains.
- The demagnetizing or stray field energy or grains shape anisotropy: through the appearance of magnetic poles at the laser spots rather than closure domains.
- The magnetic walls energy and mobility: through a change in the domains and walls length during the domains' refinement effect.

The spot size is usually of the order of 100 $\mu$m and in should be lower than the typical grain size (10-30 mm for the GOES).

Other explanations related to magnetization reversal mechanisms also have to be considered when looking at the static and dynamic hysteresis. New laser spots can potentially act as:

- new walls pinning center with a coercive field threshold modified by the laser
- new walls activation center with laser induced dynamic field thresholds for nucleation and multiplication.

In order to energize the magnetic structure of an electrical steel, different surface laser techniques are known. These techniques can be classified in three categories of laser processes :

- "irradiation" : the electrical steel is irradiated with a continuous wave laser (CWL) or a long pulsed laser (LPL) (pulse duration comprised between 100 ns and 200ns). The laser beam heats the metal at the laser spot. In this case, the retention temperature of the refined magnetic structure is low: it is of the order of 450°C or less. Consequently, the effect of the laser irradiation disappears after a further recrystallization, and/or a further coating, and/ or a further stress release annealing and the magnetic structure isn't governed by the laser treatment.
- "scribing" : the electrical steel is irradiated with a short pulsed laser (SPL) (pulse duration comprised between 1 ps and 100ns). The retention temperature of the magnetic structure is once again limited: it is of the order of 550°C or less. Moreover, the need of control on one hand of the width of the grooves created by the laser and on the other hand of the depth and width of the heat affected zone make this process hard to implement in a production line at high speed.
- "ablation" : the electrical steel is irradiated with an ultra-short pulsed laser (USPL) (pulse duration comprised between 10 femtosecond (10 fs) and 1 picosecond (1 ps)).

EP3760745 describes a process for manufacturing an electrical steel having heat-resistant refined magnetic domains. In this process, grooves are formed on one or both sides of a steel sheet with a laser beam that is split into multiple sub-beams so as to reduce the thermal diffusion deposits (or equivalently the recast layer) formed by laser "ablation". This document discloses at paragraph 30 that the single pulse instantaneous peak power density of the sub-spot formed by a single sub-beam on the surface must be less than $5.0 \times 10^{11}$ W/mm$^2$ in order to obtain satisfactory results. More specifically, "the temperature rise of a single point on the surface of the grain-oriented silicon steel presents the dual characteristics of a brief cooling and rapid accumulation, thereby overcoming the problems of thermal melting and deformation caused by the continuous accumulation of heat in the traditional long-spot grooving method, so that the groove morphology of the grain-oriented silicon steel having heat-resistant refined magnetic domain [...] is in a controllable state, and the molten deposits at the edge can be significantly controlled".

However, limiting the peak power density imposes an upper limit on the energy per pulse or a lower limit on the pulse width or duration. The larger the pulse width is, the larger the so-called heat affected zone is. The heat affected zone is a zone around the spot of the laser beam in which the part of the energy of the laser beam has diffused due to thermal diffusion and in which the magnetic structure is disturbed and damaged. The "ablation" laser treatment disclosed by EP3760745 doesn't as a consequence solve the technical problem of the heat affected zone and of the retention temperature.

Further, the scanning speed of the laser - and hence the process production speed - is limited by the pulse width of the laser.

Then, in EP3760745, the laser scanning lines are perpendicular to the rolling direction which can be associated with a non optimal iron losses reduction rate, depending on the local direction of the induction flux lines.

Finally, in EP3760745:

- the laser process proposed is dedicated to the grain oriented electrical steels with no disclosed adaptation for other kinds of fully process or semi-processed materials.
- no laser patterns are proposed for fully processed non textured materials.
- no laser patterns with scanning directions forming a small angle with the TD are specified to reduce more efficiently the losses when the magnetic flux density lines make a same small angle with the RD of fully processed magnetic materials.
- no laser patterns with scanning directions parallel to or slightly tilted from the RD are specified to reduce the losses when the magnetic flux density is along TD of fully processed textured magnetic materials.
- no laser pattern and scanning direction is adapted for semi-processed magnetic materials before the second recrystallisation.

As a consequence, the invention aims at proposing a process for manufacturing heat-resistant magnetic domain refined grain-oriented electrical steel having an increased retention temperature compared to prior art electrical steels, allowing further recrystallization, and/or further coating, and/ or further stress release annealing and compatible with a high speed production line, the refinement being associated with an effective decrease of the losses and/or of the vibration noises for a large range of working conditions.

## SUMMARY OF THE INVENTION

Hence, the invention relates to a process for manufacturing an electrical steel sheet, the process comprising :

a- providing a sheet of laminated electrical steel having a first and a second surface, a rolling direction or at least one easy magnetization direction and a characteristic time for heat diffusion;

b- forming a plurality of grooves on at least one of the first and second surfaces with at least one pass of a pulsed laser, each pass being associated with a scanning direction, the laser having a laser pulse repetition frequency, a pulse duration and emitting a light at a laser wavelength with a peak power density and a cumulative energy density per pass, the process being characterised in that :

i) the laser pulse duration is equal to or less than a heat diffusion characteristic time of the electrical steel;
ii) the peak power density is more than 50 TW/cm$^2$ or/ and the product between the peak power density and the pulse repetition frequency is more than 5000 TW/cm$^2$/ms.
iii) the cumulative energy density per laser pass is comprised between ~ 10 J/cm$^2$ and 3500 J/cm$^2$ .

This process allows to ensure very particular microscopic and macroscopic effects in the structure of the electrical steel. The process according to the invention is a non-thermal ablation process allowing to form clean grooves of controlled depth with a very small heat-affected zone or even no heat-affected zone, with a higher retention temperature than prior art process. Consequently, the process according to the invention can be performed at any manufacturing step of the electrical steel in view of its intended use, for example before a second recrystallisation and glass-film coating, after a second recrystallisation including a glass-film coating but before the final insulating coating or after the final insulating coating with a posteriori recoating or no recoating.

In a non-limitative embodiment, the manufactured electrical steel concerned by the invention comprises any kind of ferromagnetic material or alloy mainly made of Fe, Fe and (Ni or/and Co), Fe and Si ...

In a non-limitative embodiment, at step b, the grooves are formed thanks to a laser spot size smaller than or close to the grain size.

In a particular embodiment of the process for manufacturing an electrical steel sheet according to the invention, the laser wavelength is less than or equal to 1100 nanometers, for which the light absorption of metals is equal or higher than 30% at minimum (from around 33% at 1100 nm up to more than 80% below 300 nm). The use of a wavelength higher than 1100 nm would lead to a dramatic drop of the process efficiency.

In a particular embodiment of the process for manufacturing an electrical steel sheet, the laser pulse duration ($\tau$) is less than 800 femtoseconds. Such a range of pulse duration has been observed to typically correspond to a pulse duration equal or less than a heat diffusion characteristic time of most of the electrical steels.

In a particular embodiment of the process for manufacturing an electrical steel sheet according to the invention, at least two laser passes are performed. In particular, increasing the number of passes allows to reduce the cumulative energy density per pass. This allows to obtain a better reduction of the losses for some intended working frequencies and/or some intended working inductions.

In a particular embodiment of the process for manufacturing an electrical steel sheet according to the invention, at least one laser pass is applied on the first surface and at least one laser pass is applied on the second surface, at least two laser passes being optionally shifted.

In particular, distributing the total number of passes between the first and second surface allows to reduce the cumulative energy density on each surface. This allows to obtain a better reduction of the losses for some intended working frequencies and/or some intended working inductions. In a particular embodiment, the process for manufacturing an electrical steel sheet according to the invention comprises before b) : choosing a number of passes and/or at least one scanning direction according to at least one of the following criteria : an intended working frequency of the electrical sheet ; an intended working magnetic flux density direction of the electrical sheet; a target iron loss reduction of the electrical sheet at an indented working frequency and/or an intended working magnetic flux density; a target noise reduction of the electrical sheet at an indented working frequency and/or an intended working magnetic flux density.

Such an embodiment allows to design a tailor-made process taking in account the intrinsic properties of the electrical sheet to be processed but also its intended use, since the losses and noise to be reduced depend on the working parameters and no uniform reduction in the whole possible range of working parameters can be achieved.

In a particular embodiment of the process for manufacturing an electrical steel sheet according to the invention, the scanning direction of at least one laser pass is perpendicular to a direction chosen among the rolling direction, an easy magnetization direction of the electrical steel sheet and an intended working flux density direction or the scanning direction of at least one laser pass is parallel to a hard magnetization direction of the electrical steel sheet or forms an angle with the rolling direction.

At least one laser pass can form an angle with the rolling direction, so as to be parallel to a hard magnetization direction of the electrical steel sheet.

This embodiment is in particular adapted to fully processed magnetic materials with lines patterns for textured materials and dots patterns for non-textured materials, magnetized in a direction close to the rolling direction or an easy magnetization direction.

This embodiment can optionally comprise the choice of a scanning pattern pitch or period (that is to say the lines' or dots' spacing) adapted as a function of a grain size of the electrical steel sheet and a scanning direction.

In a particular embodiment of the process for manufacturing an electrical steel sheet according to the invention, the scanning direction of at least one laser pass is parallel to or forms an angle smaller than 20° with a direction chosen among the rolling direction, an easy magnetization direction of the electrical steel sheet, a direction perpendicular to a hard magnetization direction of the electrical steel sheet and an intended working flux density direction.

This embodiment can optionally comprise the choice of a scanning pattern pitch or period (that is to say the lines' or dots' spacing) adapted as a function of a grain size of the electrical steel sheet and a scanning direction.

These embodiments are among others adapted to fully processed magnetic materials with lines patterns for textured materials and dots patterns for non-textured materials, magnetized in a direction close to a transverse direction or a hard magnetization direction.

In another embodiment of the process, at least two laser passes are performed at step b and at least one of the scanning directions of the laser passes is parallel to a transverse direction that is perpendicular to the rolling direction or to a hard magnetization direction of the electrical steel sheet and at least one of the scanning directions is parallel to or forms a small angle with the rolling direction or an easy magnetization of the electrical steel sheet.

In other words, the process can comprise a laser treatment with both laser scanning lines parallel to the Rolling Direction or to an easy magnetization direction and laser scanning lines parallel to the transverse direction or to a hard magnetization direction so as to make a grid. This pattern might be well adapted for rotating fluxes rather than one directional fluxes in the rolling direction or in an easy magnetization direction, or in a transverse direction or in a hard magnetization direction, like in electrical machine yokes for example. The lines parallel to the Rolling Direction or to an easy magnetization direction can be applied on another same side than the lines parallel to a transverse direction or the hard magnetization direction, or all the lines can be applied to the same side.

The specific angles and pattern pitches or periods (lines' or dots' spacings) may be chosen as a function of the flux density magnitude and frequency along each direction.

In a particular embodiment, the process for manufacturing an electrical steel sheet according to the invention comprises at least one treatment after b) chosen among a coating, a thermal annealing for stress releasing and a thermal annealing dedicated to a second recrystallisation for texturization after b).

Indeed, since the retention temperature of the effects of the process according to the invention in terms of magnetic structure is high (typically at least 760°C), it is possible to perform subsequent treatments associated with one or more temperature equal or less than this retention temperature so as to obtain a final electrical sheet adapted for a

EP 4 382 241 A1

greater variety of uses with an enhanced productivity compared to prior art processes.

In a particular embodiment of the process for manufacturing an electrical steel sheet according to the invention, the scanning direction of at least one laser pass is chosen as a function of the rolling direction and/or of an easy magnetization direction of the electrical steel sheet and/or of an intended working flux density direction and an ablation pattern along the scanning direction of at least one laser pass is chosen among a line, an interrupted line and dots.

All these embodiments can optionally comprise the choice of a scanning angle and/or a pattern pitch or a pattern period (that is to say the lines' or dots' spacing) adapted as a function of a grain size of the electrical steel sheet, and/or a scanning direction and/or the flux density magnitude and frequency along each direction. The choice can depend on the fact that the electrical steel sheet to be treated is a fully processed or a semi-processed material.

More particularly, when the scanning direction(s) is (are) chosen relatively to the direction of an intended magnetic flux density, these embodiments are among others adapted to semi-processed magnetic materials before recrystallization.

The invention also relates to an electrical steel sheet obtained by the process according to any of the preceding embodiments.

Such an electrical steel sheet has a higher retention temperature of the effects of the laser treatment than prior art processes, rendering it adapted for numerous post-treatment steps and as a consequence for a larger variety of final uses than prior art electrical steel sheets.

The invention also relates to a fully processed non-textured electrical steel sheet obtained by the process according to the immediately preceding embodiment in which the ablation pattern consists of dots.

The invention also relates to a fully processed textured electrical steel sheet obtained by the process according to the immediately preceding embodiment in which the ablation pattern consists of lines.

Last, the invention also relates to a semi-processed electrical steel sheet obtained by the process according to the immediately preceding embodiment in which the ablation pattern consists of lines, interrupted lines or/and dots, following a second recrystallization step.

## BRIEF DESCRIPTION OF THE DRAWINGS

Embodiments of the invention will be described below, in relation to the following drawings : In the whole following figures and description, each time there is a comparison between the three laser techniques (Long Pulse Laser (LPL) irradiation, Short Pulse Laser (SPL) scribing and Ultra Short Pulsed Laser (USPL) ablation), and except if laser parameters are specified differently or more precisely, the corresponding three samples have been processed with the three pulsed laser techniques while keeping the same spot size (50 $\mu$m) and the same scanning speed (v = 5 mm/s, keeping in mind that the speed of the ablation can be increased significantly up to 250 mm/s thanks to the laser power by keeping the laser-matter interactions):

- the LPL irradiation process (IRR) involves a peak power density PPD less than 20 MW/cm$^2$ and the limit CED of around 600 J/cm$^2$ (maximum value that optimizes the performances and above which there is either a critical coating damage or a sheet deformation)
- the SPL scribing process (SCR) involves a peak power density PPD ranging from 20 MW/cm$^2$ to< < 200 MW/cm$^2$ and the limit Cumulative Energy Density of 600 J/cm$^2$ (maximum value that optimizes the performances and above which there is either a critical rugosity increase or a sheet deformation)
- the USPL ablation process (ABL) involves a much higher peak power density PPD by several orders of magnitude that is to say a peak power density PPD more than 50 TW/cm$^2$ and an average Cumulative Energy Density CED of 1300 J/cm$^2$ for 1 pass (ABL 1) and of 2000 J/cm$^2$ for 2 passes (ABL 2)

In the case of USPL ablation process, the technique has been more deeply investigated and upscaled with smaller spot size (Sp = 10 and 25 $\mu$m), higher speeds (v = 70, 90 and 125 mm/s) and changeable energetical parameters up to PPD = 70 TW/cm$^2$ and CED = 3000 J/cm$^2$.

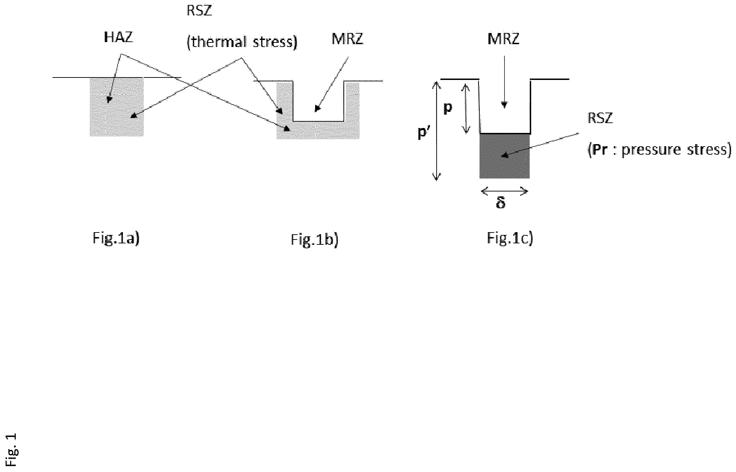

Fig. 1a, 1b and 1c are schematical views of the effects of a laser process on a material in three different cases : irradiation (fig. 1a) ; scribing (fig. 1b) ; ablation (fig. 1c).

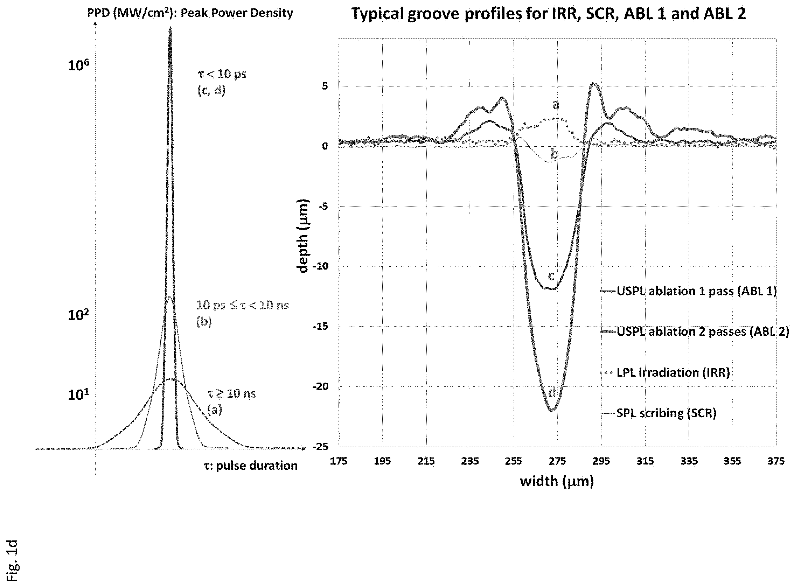

Fig. 1d represents the width/height/depth of the groove along a direction of the surface of the electrical steel orthogonal relative to the laser treatment direction (i.e. as a function of the "width" of the electrical steel) for a GOES after either LPL irradiation (IRR) (~20 MW/cm$^2$, pulse width : 100 ns) or SPL scribing (SCR) (~100 MW/cm$^2$, pulse width : 4 ns) or USPL ablation (ABL) (PPD > 50 TW/cm$^2$, pulse width = 500 fs, 1 pass (ABL 1) or 2 passes (ABL 2)). This figure shows the relationship between pulse duration and groove profiles measured with a confocal microscope (a: irradiation, b: scribing, c and d: ablation with one or two passes).

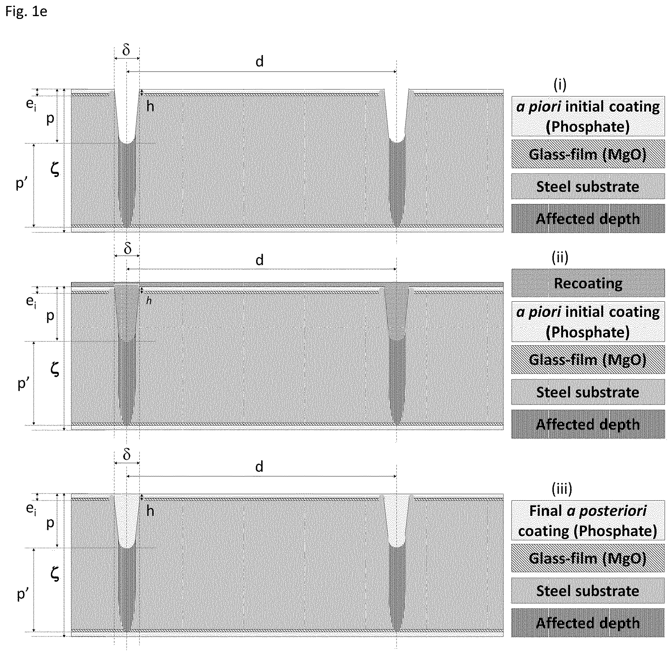

Fig. 1e is a schematical view of the three considered USPL ablation process strategies:

- Fig. 1e (i) is a scheme of the USPL groove after insulation coating;
- Fig. 1e (ii) is a scheme of the USPL groove after insulation coating but with subsequent recoating;
- Fig. 1e (iii) is a scheme of the prior USPL groove with a posteriori recrystallization or/and insulating coating.

Fig. 2a is an image of a 0.30 mm thick 10 mm* 10 mm GOES sample after laser irradiation treatment obtained with a magnetic force microscope (MFM).

Fig. 2b is an image of a 0.30 mm thick 10 mm* 10 mm GOES sample after laser scribing treatment obtained with a magnetic force microscope (MFM).

Fig. 2c is an image of a 0.30 mm thick 10 mm* 10 mm GOES sample after laser ablation treatment obtained with a magnetic force microscope (MFM).

Fig. 3a is an image of a 0.27 mm thick 60 mm *60 mm GOES sample after the laser irradiation treatment equivalent to Fig. 2a with a MOIF microscopy technique.

Fig. 3b is an image of a 0.27 mm thick 60 mm *60 mm GOES sample after the laser scribing treatment equivalent to Fig. 2b with a MOIF microscopy technique.

Fig. 3c is an image of a 0.27 mm thick 60 mm *60 mm GOES sample after the laser ablation treatment equivalent to Fig. 2c with a MOIF microscopy technique.

Fig. 4a represents the process principle to define and explain the spot size Sp, the laser power Pw, the pulse power PP, the pulse duration $\tau$, the repetition frequency fr, the pulse energy PE and finally the overlap o between subsequent pulses and the number N of pulses per spot.

Fig. 4b represents the categories of laser treatments in the plane (Pulse Energy Density PED, Peak Power Density PPD).

Fig. 4c illustrates the pulse energy or/and power parts responsible for the two main laser impacts, i.e. the groove depth p and the Laser Induced Shock Wave Pressure Pr respectively.

Fig. 5a comprises three optical microscope images with three different magnifications of the GOES sample equivalent to Fig. 2a after irradiation (pulse duration : 100 ns ; scanning speed : 5 mm/s ; repetition frequency : 40 kHz ; 1 pass).

Fig. 5b comprises three optical microscope images with three different magnifications of the GOES sample equivalent to Fig. 2b after scribing (pulse duration : 4 ns ; scanning speed : 5 mm/s ; repetition frequency : 100 kHz ; 1 pass).

Fig. 5c comprises three optical microscope images with three different magnifications of the GOES sample equivalent to Fig. 2c after ablation (pulse duration : 500 fs ; scanning speed : 5 mm/s ; repetition frequency : 10 kHz ; 2 passes)

Fig. 5d comprises three EBSD images (Electrons Back-Scattering Diffraction) with poles figures, revealing the local crystallographic misorientations at the laser spots of the GOES samples equivalent to Fig. 2a, Fig. 2b and Fig. 2c after irradiation (pulse duration : 100 ns ; scanning speed : 5 mm/s ; repetition frequency : 40 kHz ; 1 pass), scribing (pulse duration : 4 ns ; scanning speed : 5 mm/s ; repetition frequency : 100 kHz ; 1 pass) and ablation (pulse duration : 500 fs ; scanning speed : 5 mm/s ; repetition frequency : 10 kHz ; 2 passes) respectively.

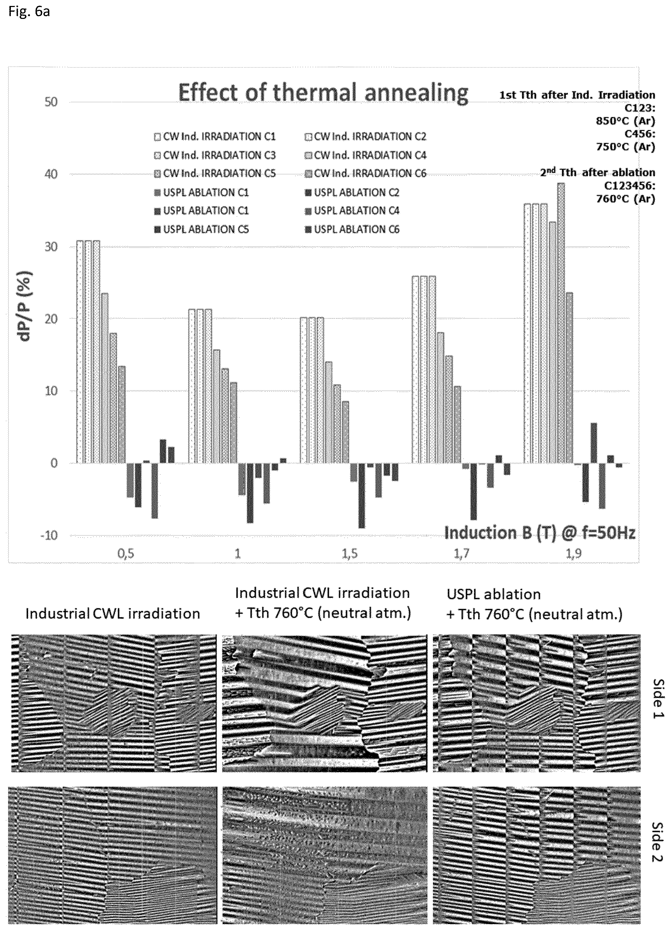

Fig. 6a shows the results of thermal retention tests carried out on a High-B GOES SiFe grade with thickness 0.23 mm directly up to 760°C-850°C in a controlled and neutral atmosphere. The top figure shows the relative power loss variations of a High-B GOES SiFe grade with thickness 0.23 mm after annealing for the same industrial samples laser treated with a commercial irradiation process and then laser treated with the ablation technique. Samples CI to C6 are submitted to the same protocol for statistical reproducibility analysis. The bottom figure shows the magnetic structure observation after the laser treatment without and then with thermal annealing respectively for the same industrial samples laser treated with a commercial irradiation process and then processed with the ablation technique according to the invention. In this case, the USPL ablation configuration comprises a pulse width of 500 fs, an average power of 14 W, a scanning speed of 70 mm/s, a spot size Sp of 25 $\mu$m, a peak power density PPD of 57 TW/cm$^2$ and a cumulative energy density CED of 1000 J/cm$^2$ per side, the repetition frequency being equal to 100 kHz. The angle between the laser scanning direction and the rolling direction is 90° and the distance between two successive laser lines is 3000 $\mu$m. The surface laser treatment is performed at both sides of the electrical steel sheet.

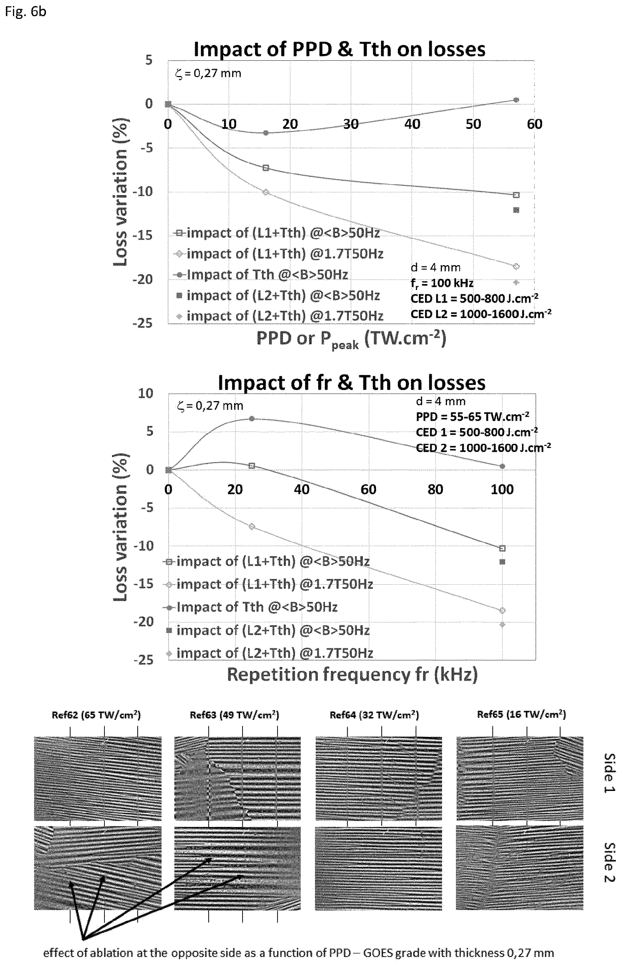

Fig. 6b shows the results of thermal retention tests carried out on a conventional GOES SiFe grade with thickness 0.27 mm directly up to 760°C-850°C in a controlled and neutral atmosphere as a function of the peak power density PPD (peak pressure of Laser Induced Shock Wave Pressure LISW) and repetition frequency (penetration depth of Laser Induced Shock Wave Pressure LISW). The upper figure shows the results of thermal retention tests carried out on a conventional GOES SiFe grade with thickness 0.27 mm as a function of the peak power density PPD (peak pressure of Laser Induced Shock Wave Pressure LISW). The middle figure shows the results of thermal retention tests carried out on a conventional GOES SiFe grade with thickness 0.27 mm as a function of repetition frequency (penetration depth of Laser Induced Shock Wave Pressure LISW). The bottom figure shows the magnetic structure observation with a MOIF microscopy technique after the laser treatment and after thermal annealing at both sides of samples laser treated by ablation only at one side for various peak power densities PPD and repetition frequencies.

Figure 7 represents the groove depth (in micrometers) as a function of the CED (in J/cm$^2$), in the case of an ablation treatment according to the invention, with Sp = 25-50 $\mu$m, fr = 10-100 kHz, v = 5 - 100 mm/s, Pw = 1 - 20 W.

Fig. 8a represents the relative iron loss reduction ΔP/P for a GOES sample (conventional GOES grade with a thickness of 0.22-0.23 mm) after a laser treatment, relatively to the same sample with no laser treatment for different types of laser treatments (irradiation, scribing, ablation one pass, ablation two passes) when the GOES sample is submitted to various induction fields B at nominal frequency f = 50 Hz in the rolling direction.

Fig. 8b represents the relative iron loss reduction ΔP/P for a GOES sample (thicker conventional GOES grade with a thickness of 0.27-0.28 mm) after a laser treatment, relatively to the same sample with no laser treatment for different types of laser treatments (irradiation, scribing, ablation one pass, ablation two passes) when the GOES sample is submitted to various induction fields B at nominal frequency f = 50 Hz in the rolling direction.

Fig. 9a represents the relative iron loss reduction ΔP/P and the relative variation of the magnetic permeability Δμ/μ for a GOES sample (conventional GOES grade with thickness 0.22-0.23 mm) after a laser treatment, relatively to the same sample with no laser treatment for different types of laser treatments (irradiation, scribing, ablation one pass, ablation two passes) as a function of the working frequency for various induction fields in the rolling direction.

Fig. 9b represents the relative iron loss reduction ΔP/P and the relative variation of the magnetic permeability Δμ/μ for a GOES sample (thicker conventional GOES grade with a thickness of 0.27-0.28 mm) after a laser treatment, relatively to the same sample with no laser treatment for different types of laser treatments (irradiation, scribing, ablation one pass, ablation two passes) as a function of the working frequency for various induction fields in the rolling direction.

Fig. 10a shows an estimation of magnetic vibro-acoustic noise reduction factors obtained for a conventional GOES with a thickness of 0.27-0.28 mm for various harmonic components after irradiation or scribing or ablation processes. It corresponds to variation of the A-weighted pressure sound level versus induction field at 1500 Hz (1 side and 2 sides). The laser treatment conditions at low scanning speed are given on top of the figure.

Fig. 10b shows measurements of magnetic induced vibrations reduction factors obtained for a conventional GOES with thickness t = 0.27-0.28 mm for various fundamental and harmonic components after USPL ablation processes with high scanning speed and high PPD. The laser treatment conditions are given on top of the figure.

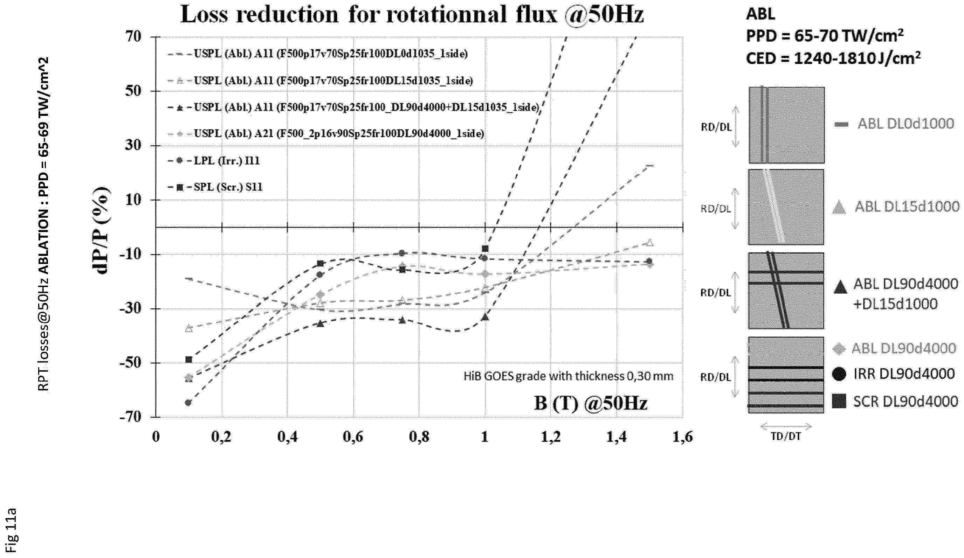

Fig. 11a shows the relative iron loss reduction ΔP/P for a GOES sample after a laser treatment, relatively to the same sample with no laser treatment for different types of laser treatments (irradiation, scribing, ablation one pass, ablation two passes according to the invention) and various ablation patterns when the GOES sample is submitted to changeable rotating induction fields B but at nominal frequency f = 50 Hz (High-B GOES grade with thickness 0.30 mm). Laser configurations and patterns are specified on the legend of the figure and correspond to a peak power density ranging from 65 TW/cm$^2$ to 70 TW/cm$^2$ for the ablation processes).

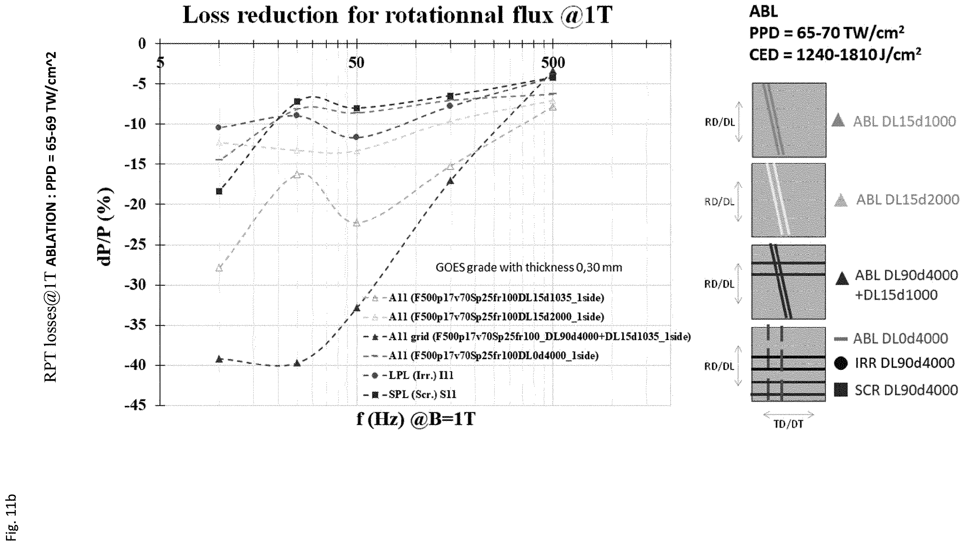

Fig. 11b shows the relative iron loss reduction ΔP/P for a GOES sample after a laser treatment , relatively to the same sample with no laser treatment for different types of laser treatments (irradiation, scribing, ablation one pass, ablation two passes according to the invention) and various ablation patterns as a function of the working frequency f for a rotating induction field B = 1 T (High-B GOES grade with thickness 0.30 mm). Laser configurations and patterns are specified on the legend of the figure and correspond to a peak power density ranging from 65 TW/cm$^2$ to 70 TW/cm$^2$ for the ablation processes).

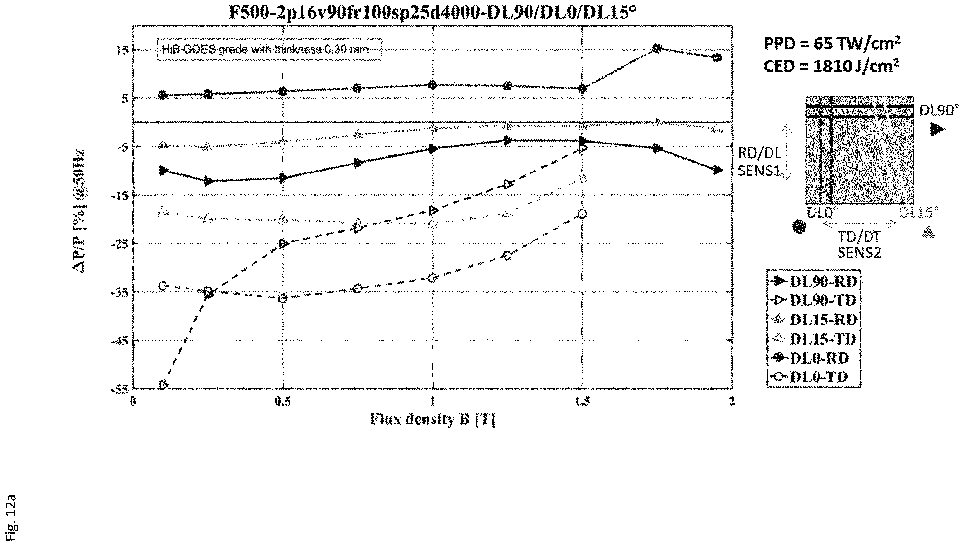

Fig. 12a shows the relative iron loss reduction ΔP/P for a GOES sample after a laser treatment, relatively to the same sample with no laser treatment for different lines patterns of an USPL Ablation treatment according to the invention (fixed Sp=25 μm, PPD = 65 TW/cm$^2$, 2-passes CED = 1810 J/cm$^2$) when the GOES sample is submitted to various bi-directional induction fields B but at nominal frequency f = 50 Hz in both the rolling and the transverse directions (High-B GOES grade with thickness 0.30 mm) and comparisons between lines along the rolling direction RD or the transverse direction TD as a function of magnetic flux density direction.

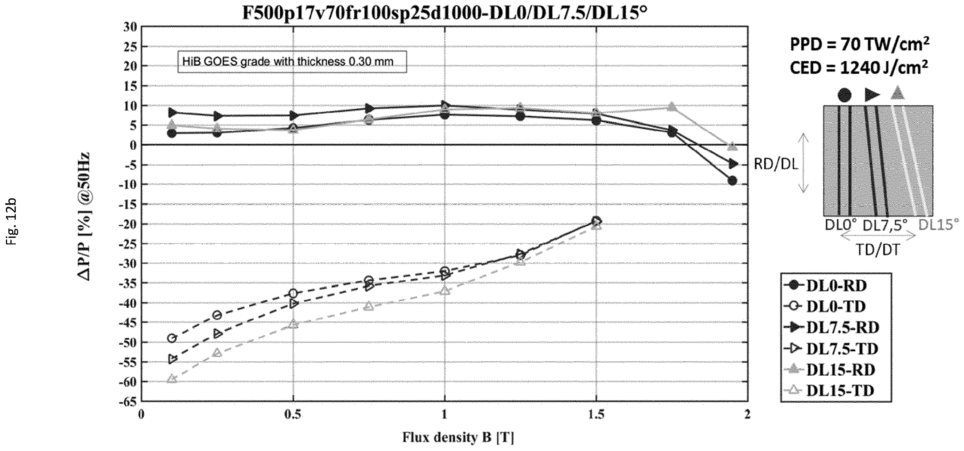

Fig. 12b shows the relative iron loss reduction ΔP/P for a GOES sample after a laser treatment , relatively to the same sample with no laser treatment for different lines patterns of an USPL Ablation treatment according to the invention (fixed Sp=25 μm, PPD = 70 TW/cm$^2$, 1-pass CED = 1240 J/cm$^2$) when the GOES sample is submitted to various bi-directional induction fields B but at nominal frequency f = 50 Hz in both the rolling direction RD and the transverse direction TD (High-B GOES grade with thickness 0.30 mm) and comparisons between lines forming different small angle with RD (0 < θ <_ 15°) as a function of magnetic flux density direction.

Fig. 13a gives the innovative most adapted laser patterns and the laser scanning direction θ to be used with the USPL ablation process either after recrystallisation or before recrystallisation as a function of the magnetic flux density direction Θ.

Fig. 13b illustrates the practical use of any laser pattern adaptation to the magnetic flux density direction within a magnetic circuit when the laser treatment is performed either before or after the second recrystallisation step during the steel manufacturing and according to the invention.

It gives an example of homogeneous/inhomogeneous patterns adapted to the magnetic flux density direction within a toroidal magnetic circuit (a magnetic ring) made of special alloy with iron and cobalt (FeCo).

Fig. 14a shows that the USPL ablation treatment performed with various specific patterns for the magnetic losses reduction and for semi-processed ferromagnetic alloys such as an iron-cobalt alloy ($Fe_{w0.5}Co_{w0.5}$ composition) working at a frequency of 50Hz.

Fig. 14b shows the impact of a specific and optimal USPL ablation process implemented before the second recrystallisation according to the invention (with PPD > 50 $TW/cm^2$ and using laser line patterns parallel to the magnetic flux density lines, *i.e.* magnetic induction lines) on a special ferromagnetic alloys based on iron and cobalt ($Fe_{w50\%}Co_{w50\%}$) at working frequency of f = 50 Hz.

Fig. 14c shows the impact of the specific and optimized USPL ablation process implemented before the second recrystallisation on the hysteresis loops at a working frequency of 50Hz for a special ferromagnetic alloys based on iron and cobalt ($Fe_{w50\%}Co_{w50\%}$).

On the drawings, the same reference signs show the same or similar objects.

## DETAILED DESCRIPTION

The invention deals with a process for manufacturing electrical steel, and in particular a grain-oriented electrical steel (GOES) having heat-resistant refined magnetic domains with a higher retention temperature and a reduced heat affected zone compared to prior art or even no affected zone.

The manufactured electrical steel can for example be a grain-oriented electrical steel (GOES), a non grain-oriented electrical steel (NOES), a special ferromagnetic magnetic alloy, having heat-resistant refined and partly orientable magnetic domains by surface laser process (laser induced magnetic structuring or laser surface texturization and recrystallization) with higher retention temperature and a reduced heat affected zone compared to prior art or even no heat affected zone and rather beneficial process induced residual stress zone with calibrated propagation and limited detrimental impact.

In a non-limitative embodiment, the manufactured electrical steel concerned by the invention can be classified in two main types (fully processed and semi-processed materials) and three families ($\alpha$, $\beta$, $\chi$) which can comprise:

$\alpha$) Fully processed and textured electrical steels and ferromagnetic alloys:
The final recrystallisation of this kind of material has been completely accomplished, leading to a very specific grains size and texture (crystallographic orientation of grains) at the surface or/and inside the volume of materials. In a non-limitative embodiment, this material family can comprise:

- Silicon Iron (SiFe) steels with oriented and large grains following the namely GOSS texture, usually called Grain-Oriented Electrical Steels (GOES). The main compositions of such electrical steels are usually with 3-6% of silicon and 94-97% of iron in mass.
- Iron-Nickel (FeNi) alloys with average grains and cubic texture. The main compositions of such special ferromagnetic alloy are with 27-60 % of nickel, 0-7 % of cobalt, and 33-73% of iron in mass.

$\beta$) Fully processed but non-textured electrical steels and ferromagnetic alloys:
The final recrystallisation of this kind of material has also been completely accomplished, leading to specific grains size but no particular texture (arbitrary crystallographic orientation of grains) at the surface or/and inside the volume of materials. In a non-limitative embodiment, this material family can comprise:

- Silicon Iron (SiFe) steels with non-oriented and small grains, usually called Non-grain-Oriented Electrical Steels (NOES). The main compositions of such electrical steels are usually with 3-6% of silicon and 94-97% of iron in mass.
- Iron-Nickel (FeNi) alloys with small grains and no particular texture. The main compositions of such special ferromagnetic alloys are with 20-80 % of nickel and 20-80% of iron in mass.
- Iron-Cobalt (FeCo) alloys with small grains and no particular texture. The main compositions of such special ferromagnetic alloys are with 18-50 % of cobalt and 50-82% of iron in mass.

$\chi$) Semi-processed electrical/magnetic steels and ferromagnetic alloys:
The final recrystallisation of this kind of material is incomplete, requiring performing a thermal annealing for second recrystallisation and coating when necessary. In a non-limitative embodiment, this material family can comprise:

- Semi-processed Silicon Iron (SiFe) steels. The main compositions of such electrical steels are usually with 3-6% of silicon and 94-97% of iron in mass.
- Non recrystallized Iron-Nickel (FeNi) alloys. The main compositions of such special ferromagnetic alloys are with 20-80 % of nickel and 20-80% of iron in mass.
- Non recrystallized Iron-Cobalt (FeCo) alloys. The main compositions of such special ferromagnetic alloys are with 18-50 % of cobalt and 50-82% of iron in mass.

The process according to the invention comprises :

a- providing a sheet of laminated electrical steel having a first and a second surface (for example an upper and a lower surface (or equivalently an upper side and a lower side)), a rolling direction RD or/and at least an easy magnetization direction EM and a characteristic time for heat diffusion;
b- forming a plurality of grooves on at least one of the first and second surfaces with at least one pass of a pulsed laser having a laser pulse duration $\tau$, a repetition frequency fr and emitting a light at a laser wavelength with a peak power density PPD and a cumulative energy density per pass CED, the process being characterized in that:

i) the laser pulse duration $\tau$ is of the order of or less than a heat diffusion characteristic time of the electrical steel;
ii) the peak power density PPD is more than 50 TW/cm$^2$ or/ and the product between the peak power density and the pulses repetition frequency PPD$\times$fr is more than 5000 TW/cm$^2$/ms;
iii) the cumulative energy density per laser pass (CED per laser pass) is comprised between 10 J/cm$^2$ and 3500 J/cm$^2$.

The rolling direction can be a hot or cold rolling direction.
Within the meaning of the invention, an easy magnetization direction is a preferential direction for the magnetization and the flux density within the material.
The preferential magnetic flux density direction (equivalently the direction of easiest magnetization EM) is determined by the metallurgical process. The rolling direction RD is the direction of the lamination during the mechanical processing of a steel that leads to the formation of a sheet. In grain-oriented electrical steels, the rolling direction corresponds with one preferential magnetic flux density direction (or equivalently to a direction of easy magnetization EM).
In particular, the cumulative energy density CED per laser pass can be comprised between 10 J/cm$^2$ and 3500 J/cm$^2$ for an electrical sheet thickness between 0.35 mm and 0.65 mm, between 10 J/cm$^2$ and 1900 J/cm$^2$ for an electrical sheet thickness between 0.23 mm and 0.35 mm, between 10 J/cm$^2$ and 1250 J/cm$^2$ for an electrical sheet thickness below 0.23 mm. More particularly, the cumulative energy density CED per pass can be comprised between 10 J/cm$^2$ and 1900 J/cm$^2$ for an electrical sheet thickness of 0.35 mm, between 10 J/cm$^2$ and 1650 J/cm$^2$ for an electrical sheet thickness of 0.30 mm, between 10 J/cm$^2$ and 1470 J/cm$^2$ for an electrical sheet thickness of 0.27 mm, between 10 J/cm$^2$ and 1250 J/cm$^2$ for an electrical sheet thickness of 0.23 mm. As a general rule, a lower CED/pass is associated with a lower thickness.
As a general rule, the upper limit for the CED per laser pass can be determined by either the detrimental heat generation or sheet/plate relief, rugosity or/and deformation. The upper limit for the CED depends mainly on the coating and thermo-mechanical properties of the metal but also on the sheet/plate thickness.
Within the meaning of the invention, an electrical steel sheet encompasses electrical steel sheets and electrical steel plates as long as their thickness is suitable for the intended use.
Within the meaning of the invention, an electrical steel encompasses any metallic compound comprising mainly :

-   Fe
-   Fe and (Ni and/or Co)
-   or Fe and Si.

Several subfamilies of electrical steel are known such as special alloys, amorphous materials, soft magnetic composites, nanocrystalline materials, etc.
In a particular embodiment, at step b, the laser is associated with a laser spot size on the electrical steel sheet and the laser spot size Sp is lower than a metallurgical grain size g of the electrical steel sheet and the laser pulse duration $\tau$ is of the order of or less than a heat diffusion characteristic time of the electrical steel.
The process according to the invention is designed to ensure very particular microscopic and macroscopic effects in the structure of the electrical steel.
Indeed, if the three main categories of laser treatments - irradiation, scribing and ablation - are theoretically known, these categories encompass very different realities depending on the authors, and prior art documents don't describe general rules ensuring that a laser treatment corresponds to an ablation regimen for magnetic materials according to the invention.
Let us define these categories in the context of this application.
The inventors have led numerous and time-consuming experiments in order to characterize the combinations of ranges of parameters that allow to obtain :

- either an irradiation effect according to the invention,
- or a scribing effect according to the invention,
- or an ablation effect according to the invention.

These experiments show very clearly that the effects of a laser treatment depend not only on the pulse duration, as generally admitted, but also on several other parameters including the cumulative peak power density, the peak power density and the repetition frequency.

Each laser processing configuration can be defined by the following set of parameters:

- Pulse width (or pulse duration) $\tau$
- Average laser power Pw (provided by the laser beam on the metal surface in average after having applied the transmission coefficients of the complete optical system)
- Repetition frequency fr i.e the number of pulses per second
- Scanning speed v of the scanning head
- Spot size (theoretical diameter of the laser spot at focal point) Sp (The condition Sp << g may be recommended for fully processed magnetic materials so as not to damage significantly the grains. In semi-processed materials, Sp and g can be of the same order of magnitude to impact as much as possible the recrystallization)
- Focusing condition (coef.> 1 giving the actual spot size) fx (fx = 1 in case of focusing mode, fx > 1 in case of defocusing mode)

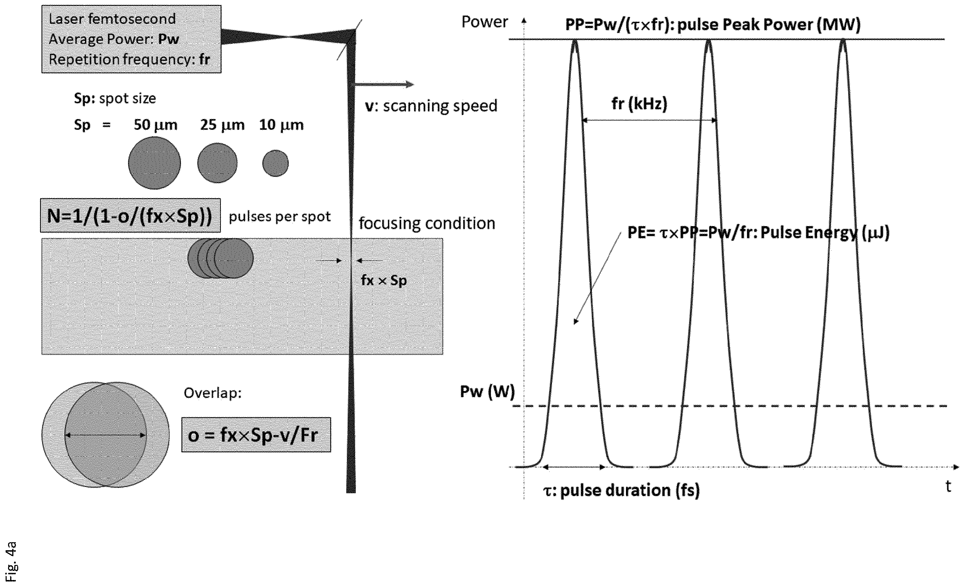

Fig. 4a illustrates the spot size Sp, the laser power Pw, the pulse duration $\tau$, the repetition frequency fr and the scanning speed. Knowing these parameters, other pertinent laser parameters can be calculated according to the following equations :

- pulse energy PE :

Equation 1

$$PE = \frac{Pw}{fr}$$

- pulse energy density PED (or equivalently fluence) :

Equation 2

$$PED = \frac{PE}{\pi \frac{(fx \times Sp)^2}{4}}$$

- peak power PP and peak power density PPD :

Equation 3

$$PPD = \frac{PP}{\pi \frac{(fx \times Sp)^2}{4}} = \frac{Pw}{\tau \times fr \times \pi \frac{(fx \times Sp)^2}{4}} = \frac{PED}{\tau}$$

- equivalent number of pulses per single spot (n or N) :

Equation 4

$$N = \frac{(fx \times Sp) \times fr}{v}$$

- cumulative energy density CED, which represents the amount of energy received along an area of the sample equal to the laser spot size taking into account the overlap, taking in account the number of laser passes Npass :

Equation 5

$$CED = Npass \times N \times PED = Npass \times \frac{(fx \times Sp) \times fr}{v} \times \tau \times PPD$$

Fig. 4a helps understand the process principle by explaining the pulse peak power PP, the pulse energy PE, the overlap o between subsequent pulses and the number N of pulses per spot.

In addition to these energetical laser process parameters, a well specified laser treatment must include the laser pattern specifications (laser scanning directions with rows and columns of lines, interrupted lines, spots, dots or grids) as follows:

- Pattern angle $\theta_1$ (DL in °): angle between a first Laser scanning Direction and the Rolling Direction RD or the Easy Magnetization direction EM
- Pattern angle $\theta_2$ (DT in °): angle between a second Laser scanning Direction and the Transverse Direction TD or a Hard Magnetization direction HM
- Pattern pitch or period; Laser lines / dots spacing (d in $\mu$m): the distance between two pattern elements (lines, interrupted lines or dots)
(The condition d < g may be recommended for fully and semi-processed magnetic materials with g of semi-processed materials smaller than for fully processed materials)

To simplify we note a laser configuration with lines thanks to the code below:
In case of focusing mode (fx = 1):

Configuration Code (one laser line pass): N/F p v $S_p$ r $f_r$ DL/DT d dsh _Yside
Configuration Code (X>1 laser line passes): N/F _X p v Sp r fr DL/DT d dsh _Yside

- N meaning nanosecond laser, and F meaning Femtosecond laser
- dsh being the pattern shift between the two sides

In case of defocusing mode, the parameter fx must be specified next to Sp.

For example: the configuration "F500p14v70fr100Sp25DL90d3000_2sides" describes a unshifted double sided laser treatment using a femtosecond laser with a pulse width of 500 fs, an average power of 14 W, a scanning speed of 70 mm/s, a repetition frequency of 100 kHz, a spot size of 25 $\mu$m (which corresponds here to the focus fx = 1), a laser line perpendicular to the Rolling Direction and a line spacing of 3000 $\mu$m.

In the figures and below, each time there is a comparison between the three laser techniques (irradiation, scribing and ablation), and except if laser parameters are specified differently or more precisely, the corresponding three samples have been processed with the three pulsed laser techniques while keeping the same spot size (50 $\mu$m) and the same scanning speed (v = 5 mm/s):

- the irradiation process (also called Long Pulse Laser (LPL) irradiation process) involves a peak power density PPD less than 20 MW/cm$^2$ and the limit cumulative energy density CED of approximately 600 J/cm$^2$ (maximum value that optimizes the performances and above which there is either a critical coating damage or a sheet deformation) ;
- the scribing process (called Short Pulse Laser (SPL) scribing process) involves a peak power density PPD comprised between 20 MW/ cm$^2$ and 200 MW/cm$^2$ and the limit cumulative energy density CED of approximately 600 J/cm$^2$ (maximum value that optimizes the performances and above which there is a critical rugosity increase or a sheet deformation);
- the ablation process according to the invention (also called Ultra Short Pulse Laser (USPL) ablation process) involves a much higher peak power density PPD by several orders of magnitude : 50 TW/cm$^2$ < PPD < 100 TW/cm$^2$ and average cumulative energy density CED of approximately 1300 J/cm$^2$ for 1 pass and average cumulative energy density CED of approximately 2000 J/cm$^2$ for 2 passes (these are the nominal values of cumulative energy density CED, to be adapted to each thickness).

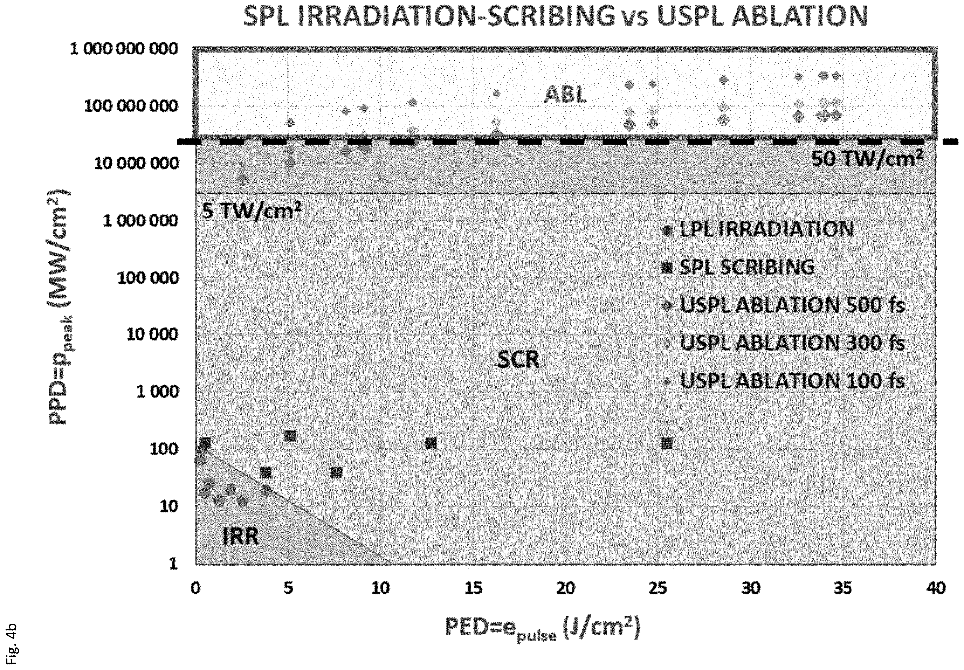

These parameters are however not limiting. In the case of the ablation process according to the invention, the technique has also been more deeply investigated and upscaled with smaller spot size such as Sp = 25 $\mu$m, higher scanning speeds of the scanning head such as v = 70, 90 and 125 mm/s and changeable energetical parameters such as a peak power density PPD up to 70 TW/cm$^2$ and a cumulative energy density up to CED = 3000 J/cm$^2$. Fig. 4b represents the regimen achieved depending both on the pulse energy density PED and on the peak power density PPD,

the pulse duration $\tau$ being 100-200 ns for the irradiation cases, 4-100 ns for the scribing cases and respectively 500 fs for the ablation case. The recommendation for the spot size in case of any surface laser treatment can be Sp << g for fully processed magnetic materials so as not to damage significantly the grains. In semi-processed materials, Sp and g can be of the same order of magnitude to impact as much as possible the recrystallization.

As can be seen on Fig. 4b, the irradiation effect according to the invention corresponds to an approximatively triangular zone IRR corresponding to a pulse energy density PED lower than typically about 10 J/cm$^2$ combined with a peak power density PPD up to 100 MW/cm$^2$.

Then, the scribing effect corresponds approximately to the SCR zone between the triangular zone and the dashed line. The dashed line is defined by PPD = 50 TW/cm$^2$ and corresponds to the bottom limit of the ablation process according to the invention.

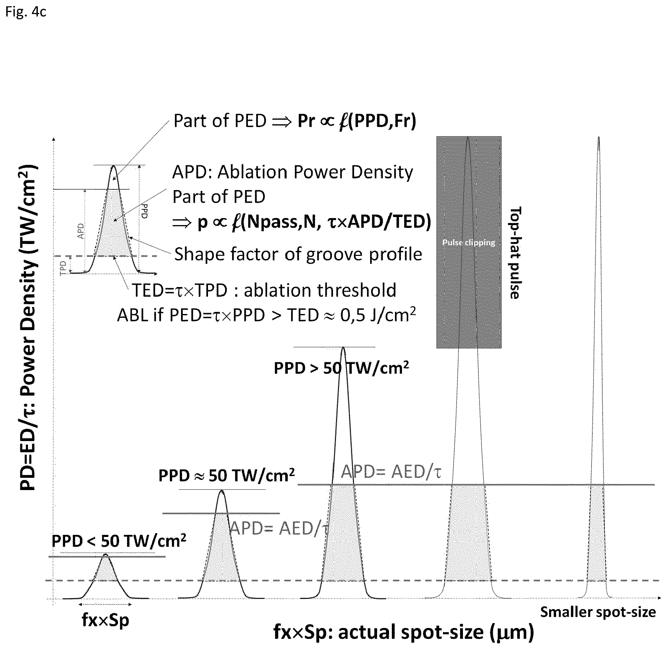

Fig. 4c illustrates the pulse energy or/and power parts responsible for the two main laser impacts, i.e. the groove depth p and the Laser Induced Shock Wave Pressure Pr respectively. The ablation effect leading to significant groove depth p, significant Laser Induced Shock Wave Pressure peak pressure Pr with penetration depth p', at high scanning speed v and with beneficial thermal retention properties according to the invention occurs only if several conditions are fulfilled: the pulse duration $\tau$ must be quite lower than 10 ps, the pulse energy density PED must be more than the Threshold Energy Density TED (TED being of the order of 0.5 J/cm$^2$ for a metal) and the Peak Power Density PPD must be more than 50 TW/cm$^2$. As shown in fig. 4c, the efficient material removal of each pulse is mainly driven by the pulse energy part between the TED and the Ablation Energy Density AED, defining the Ablation Power Density APD (APD = AED / $\tau$) which increases with the Peak Power Density PPD. The Laser Induced Shock Wave energy injected with a pressure Pr and a penetration depth p' by each pulse is mainly driven by the residual pulse energy above the Ablation Energy Density AED which is significant only for a Peak Power Density PPD equal to or higher than 50 TW/cm$^2$. The Laser Induced Shock Wave peak pressure induced by each pulse underneath the groove is mainly driven by PPD and the penetration depth p' is mainly driven by both PPD and the repetition frequency fr. Experimentally, p' becomes significant for thickness 0.27 mm when the product PPD$\times$fr is above PPD$\times$fr - 5000 TW/cm$^2$/ms.

In order to decide if a laser treatment corresponds to an ablation regimen or an irradiation regimen or an irradiation regimen according to the invention, all the following qualitative and - when applying - quantitative observations are necessary :

a) optical visualizations of heat affected zones with classical optical microscopy and scanning electron microscopy;
b) optical visualization of either dispersed thermal induced melting or located Laser Induced Shock Wave induced crystal deformation which lead to crystallographic misorientations at the vicinity or beneath the groove with electron back-scatter (EBSD) microscopy;
c) observation of groove profiles with confocal microscope : width and depth; recast height limitation; deformation of sheet limitation;
d) Observations of magnetic structures with :

- magneto-optical indicator film (MOIF) microscopy ;
- magnetic force microscopy (MFM).

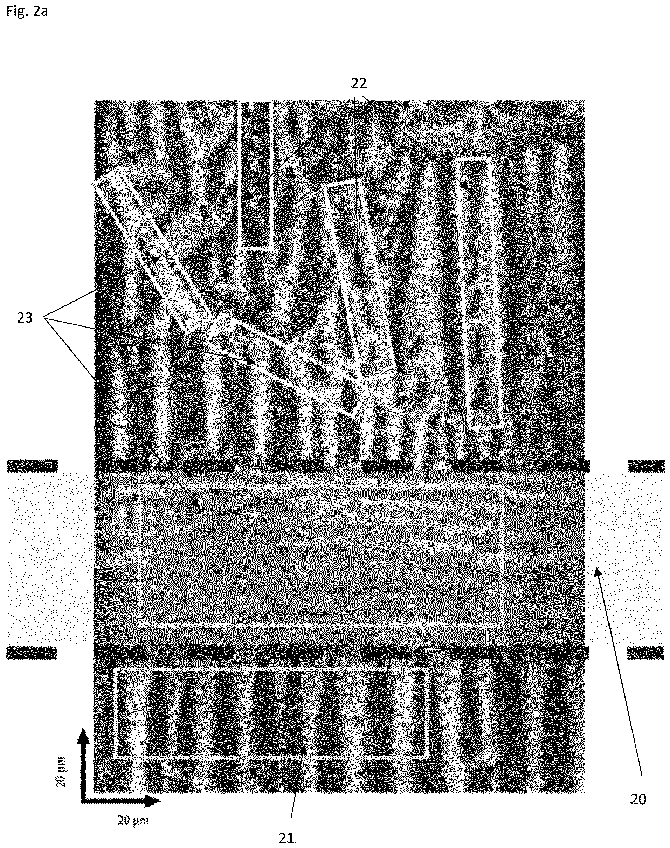

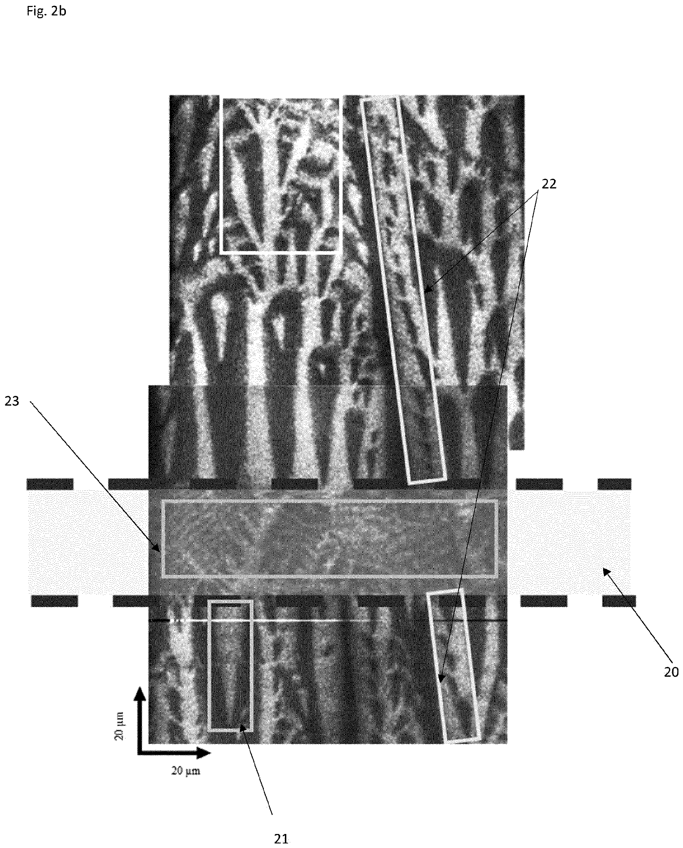

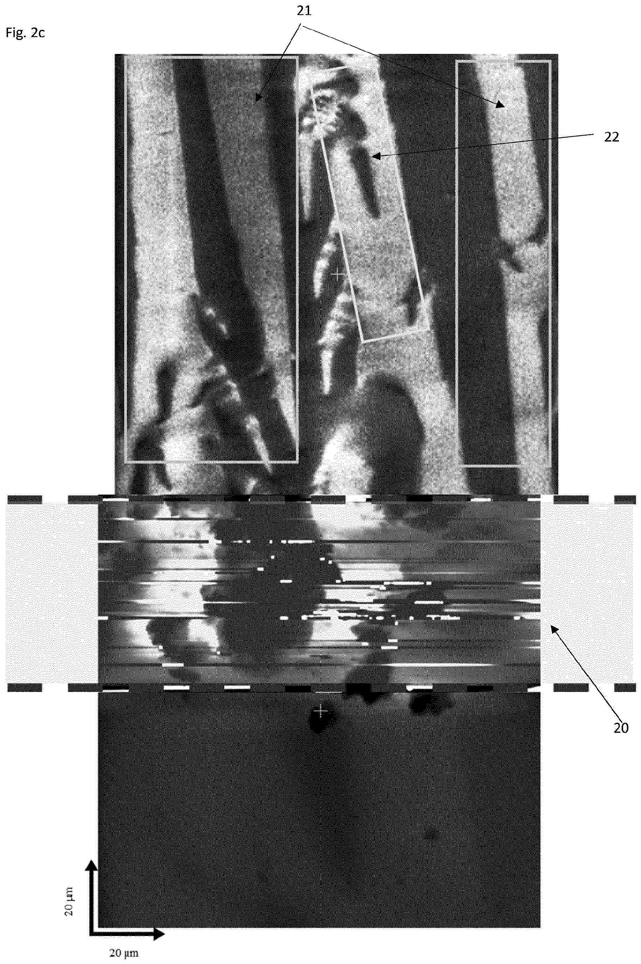

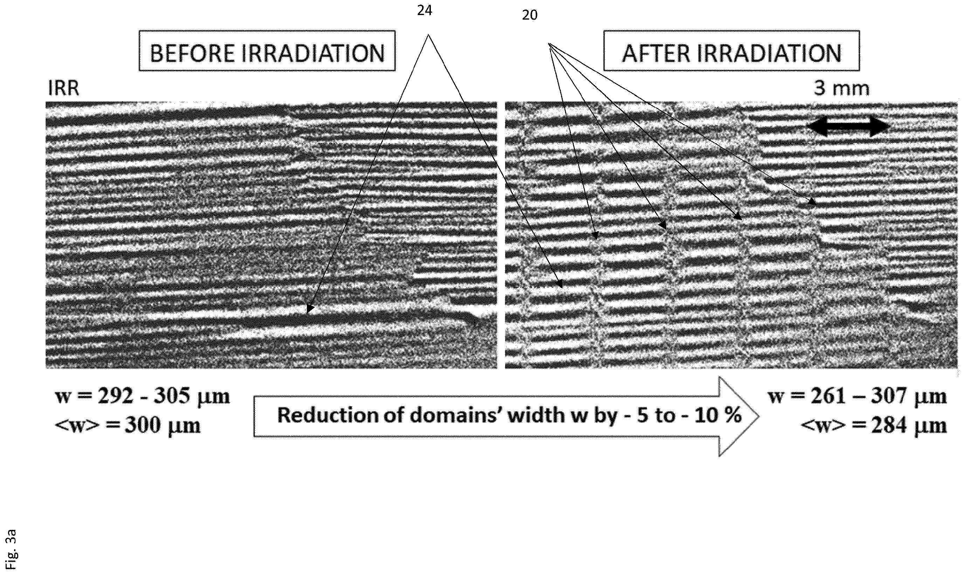

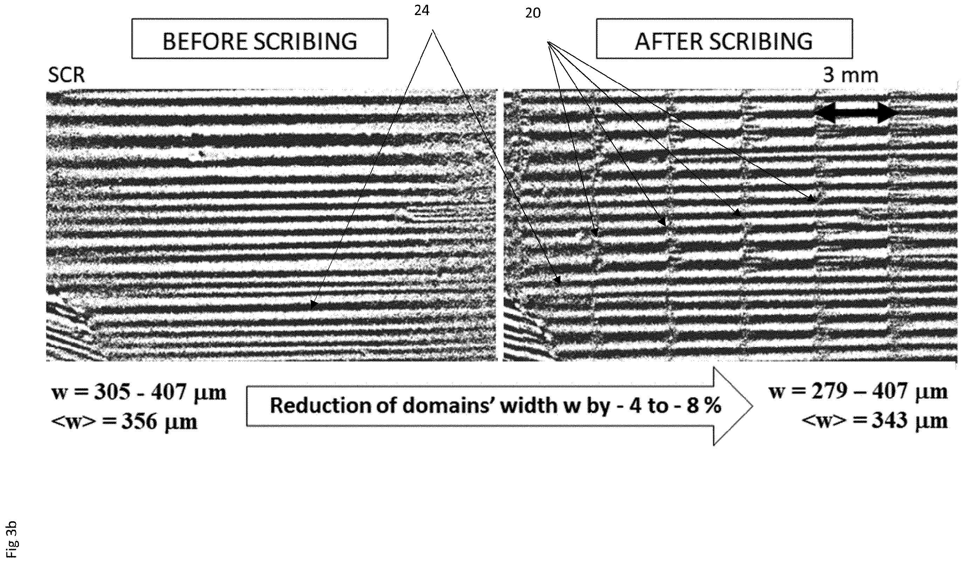

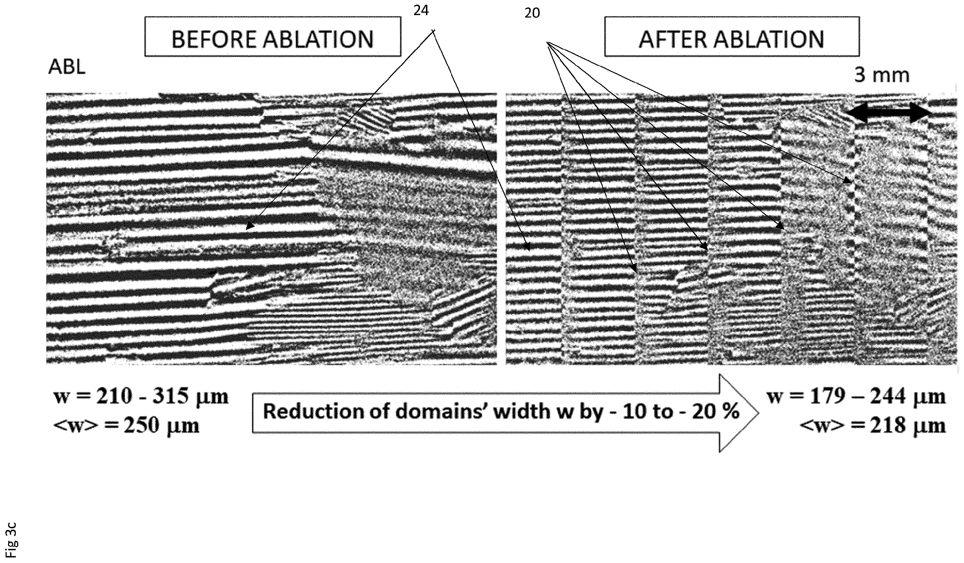

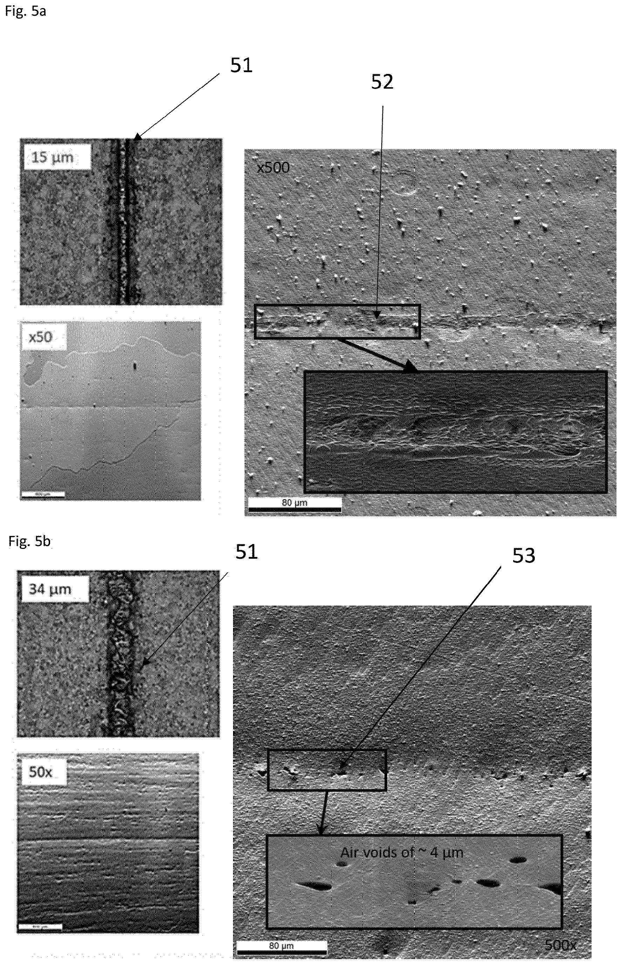

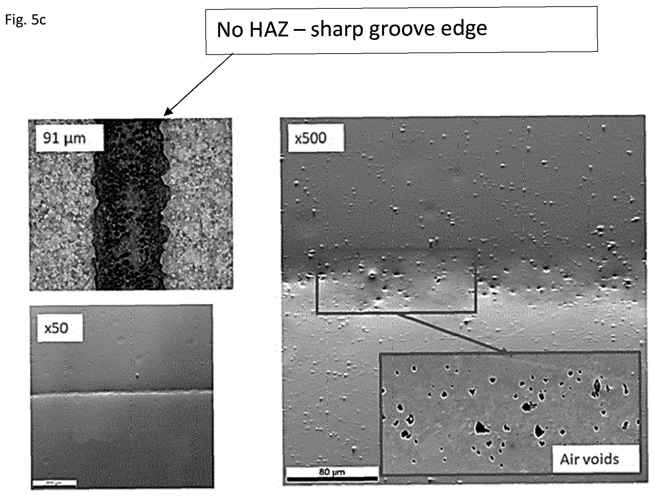

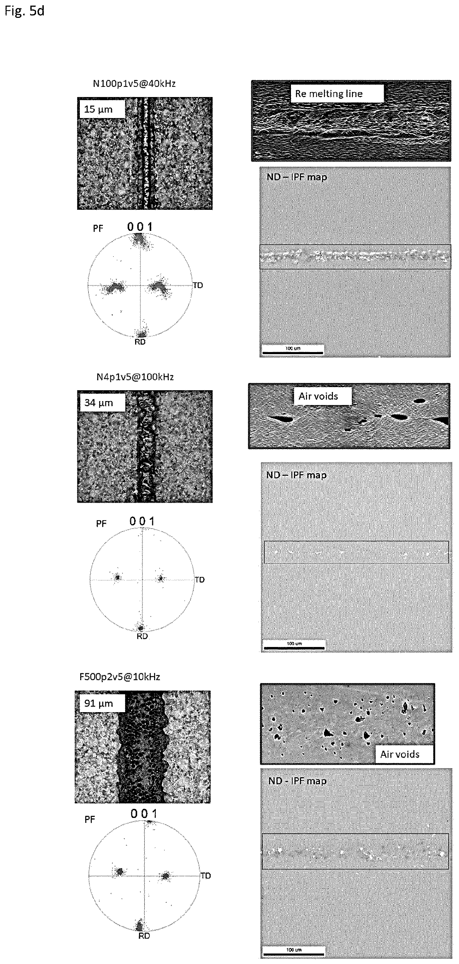

On a practical microscopic point of view, the effects of laser ablation according to the invention compared to laser irradiation or laser scribing can be defined in view of Fig. 1 (a, b, c), Fig. 2 (a, b and c), Fig. 3 (a, b and c) and Fig. 5 (a, b and c).

Figure 1 is a schematic of a material after :

- either laser irradiation (Fig. 1a) : the laser induces only a heat affected zone
- or laser scribing (Fig. 1b): the laser removes part of the material in a so-called material removal zone (MRZ) and induces a strong thermal stress in a so-called residual stress zone (RSZ) around the MRZ),
- or laser ablation (Fig. 1c, the laser removes part of the material in the so-called material removal zone (MRZ) and induces a strong pressure stress and plastic strain (potential small dislocations) in a very located residual stress zone (RSZ) under the MRZ.

Ultra-fast laser-matter interaction is a rather complex phenomenon. Several models have been developed to describe this interaction, such as in particular the so-called two temperature model, which is still under discussion by scientists.

To sum up, during laser treatment, the laser energy is mainly absorbed by the electrons of the metal. A spontaneous electronic relaxation process occurs then that can involve electron-electron and/or electron-lattice interactions.

The characteristic time of the electron-electron interactions is typically less than 100 fs. It is in general of the order of a few tens of femtoseconds and much lower of the one of the electron-lattice interactions (of the order of a few tens of picoseconds).

As a consequence, in case of ultra-short pulses, during the transient phase, the temperature of the electrons can be by several orders of magnitude higher than the metal lattice temperature, generating a plasma with very high temperature just above the spot on the metal. Therefore, phenomena highly dependent on the plasma temperature can be, at equivalent fluence, highly amplified by the use of ultra-short pulses.

Unlike the irradiation process or the scribing process that lead to a thermal stress, in the non-thermal ablation process according to the invention, with pulse duration between 1 fs and 1 ps, the laser beam and its plasma flame sublimates the coating and metal particles at the laser spot, automatically generating a deep groove without enough time for the heat to penetrate in the metal. The generation of clean deep grooves with superficial geometrical cuts contributes to the appearance of magnetic poles at the groove edges due to the magneto-crystalline and grains shape anisotropy or misoriented closure domains due to the demagnetizing and stray field energy. As long as the local magnetocrystalline anisotropy inside the closest neighbouring crystallized grains is strong compared to the poles energy, and not weakened by a compensating stress induced anisotropy as it is the case for LPL irradiation and SPL scribing processes, the material won't react by creating misoriented closure domains but rather keep a few amount of poles in addition to a significant number of well oriented closure domains called spike-like domains, to keep both energies low.

Meanwhile and underneath the laser spots, the plasma formed during the ablation process at an extremely high temperature Te for the electrons generates a surface laser induced shock wave with an extremely high peak pressure Pr in the axial direction (i.e. perpendicular to the sheet plane) as represented on Fig. 1c. The resulting residual pressure stress obtained after the process might contribute to the appearance of either located strains and volume magnetic equivalent charges or differently shaped and oriented thin closure domains underneath the grooves, at a more or less important distance from the surface depending on the shock wave penetration depth which increases significantly with either the pulse width or the laser repetition frequency and the pulse peak power.

Both the magnetic poles and the underneath volume charges and closure domains help either efficiently and deeply refining the main 180° domains structure in static conditions and deeply inducing walls nucleation and multiplication centers in dynamic conditions. By using non classical thermal equations with a two temperature model, it is possible to estimate both the Material Removal Zone (MRZ) with its width ($\delta$) and depth (p) and the purely mechanical induced stress, called shock wave peak pressure ($P_r$) induced during the process inside the material underneath the groove and its penetration depth (p').

The groove depth p is usually limited by a groove form factor of one, meaning that the maximum groove depth p equals the spot size Sp. However, in case of patterns with continuous lines, the groove depth could be limited to one quarter of the sheet thickness. In case of patterns with dots, the groove depth could be limited to one half of the sheet thickness.

In the case of an ultra-short pulse laser ablation process according to the invention, one can speak of "non thermal" ablation, associated with a very small heat-affected zone or even no observable heat-affected zone. These effects can be experimentally observed via the complementary techniques cited above.

The observation and analysis of groove profiles with an optical microscope and a confocal microscope give access to the determination of the width, depth, form factor and profile geometry with or without relief. Images of fig. 1d are obtained by locally analyzing 150 mm * 150 mm samples of a conventional GOES SiFe material having a thickness of 0.27 mm after a laser treatment (no specific preparation is required with this observation technique). In the case of an LPL irradiation treatment (fig. 1d "irradiation" case), no groove profile can be detected but rather a small swell due to the heat induced expansion and deformation of coating. In the case of a SPL scribing treatment (fig. 1d "scribing" case), the profile reveals a small groove with limited depth but also recast and resolidified matter at its borders with height that can be similar to that of the groove depth. The deeper the scribing grooves, the bigger the heat affected zones. Ablation grooves obtained with a non thermal ablation process according to the invention can be observed on fig. 1d - "ablation" cases 1 pass (ABL 1) and 2 passes (ABL 2). Such a groove can be easily identified thanks to its complete parabolic profile (or equivalently so-called "top-hat" parabolic profile) with a width (10-100 um) and a depth (5-50 um) (volume of MRZ - width×depth) satisfying a ratio between the depth of the groove and the width of the groove - also called form factor - close to 1 and very limited or no Heat Affected Zone (HAZ) that is not possible to achieve by other mechanical or prior art laser techniques. The affected zone due to ablation is rather the RSZ . The main beneficial consequence of the significant groove without large thermal induced stress but rather a very located RSZ due to the LISW shock wave is a very good thermal retention capability which makes it possible to apply the process at any manufacturing step (see fig. 1e): before the second recrystallisation and glass-film, after the second recrystallisation including the glass-film but before the final insulating coating or after the final insulating coating with a posteriori recoating or no recoating.

The results of magnetic force microscopy (MFM) imaging close to the laser treatment line in the three cases are shown on fig.2a, fig. 2b and fig.2c. for three 10 mm *10 mm conventional SiFe GOES samples having a thickness of 0.3 mm.

The magnetic force microscopy (MFM) is an extension of the atomic force microscopy (AFM) designed to measure the surface magnetic structure seen as the distribution of magnetic domains and domain walls on the sample surface. This imaging mode requires a specific probe whose tip is covered with a thin layer of magnetic material.

For the measurements of fig. 2a, fig. 2b and fig. 2c, the probe had a hard magnetic coating with low magnetic moment on the tip.

The MFM imaging mode is based on two-pass techniques during the scan. During the first pass, the tip scans the surface topography (like the semi-contact AFM mode). Then, in the second pass, the tip-sample distance is increased and maintained constant based on the topography line data obtained in the first pass. Thus, by setting the tip to a certain height for the sample, the influence of Van Der Waals forces becomes negligible, as the tip is mainly affected by the magnetic force. If the tip-sample distance is kept constant, then the measurement contrast should mainly contain the magnetic information.

Regarding fig.2a, fig. 2b and fig.2c., 10mm×10mm samples are used for the MFM measurements and the size of the magnetic image is 120 $\mu$m × 120$\mu$m. For these figures, first of all, a chemical and mechanical polishing was done before the laser treatment to ensure a high quality of the MFM image. The polishing procedure started by etching the electrical steel sheet in a hydrogen chloride solution to remove the insulating coating. Then, the sample was grinded with silicon carbide papers of different grain sizes which were successively decreased and the final polishing step of polishing was done using a colloidal suspension of amorphous silica to get the minimal surface roughness. After that, a closer observation of magnetic domains structure on the laser lines was possible using the MFM imaging technique with a resolution of few nanometers.

On fig. 2a, fig. 2b and fig. 2c, the dark and light contrasts represent the repulsive and attractive interactions between the tip coating and the magnetic domain structure of surface sample. Fig. 2a shows a GOES after laser treatment using an LPL irradiation process. A multiplication of relatively small spike-like domains 21 in the vicinity of the laser treatment line 20 is observed. These domains should facilitate the reversal magnetization mechanisms near the coercive point and the remanence. However, these spike-like domains 21 are relatively small compared to the main 180° domains generated in the case of ablation (see Fig. 2c). Furthermore, the detailed magnetic structure involving these spike-like domains is highly disturbed at a distance from the laser irradiation line which corresponds to the heat affected zone. In this heat affected zone, submitted to a significant thermal induced stress, misoriented but typical domains can be observed like lancet 180° in-plane domains 22 and 90° out-of-plane closure domains 23. This disturbed area may act as a transition zone between the laser lines with refined closure domains structure and the nominal 180° main magnetic domains of classical GOES. Meanwhile, on the laser spots, the rapid heating and cooling caused thermal-induced stresses leading to the formation of local 90° closure domains with perpendicular magnetization that might serve as magnetization reversal stimulators and centers in quasi-static working conditions.

Fig. 2b shows a similar sample submitted to SPL scribing. Relatively small spike-like domains can be observed close to the laser treatment line 20. Once again, these spike-like domains are relatively small compared to the main 180° domains generated in the case of ablation (see Fig. 2c). Furthermore, the detailed magnetic structure involving these spike-like domains is still highly disturbed at a distance from the laser irradiation line corresponding to the heat affected zone. The latter is submitted to a significant thermal induced stress (likely 2D radial or in-plane tensile, then compressive and then tensile residual stress), misoriented but typical domains can be observed like lancet 180° and 90° out-of-plane closure domains and 90° in-plane magnetic domains. This disturbed area may act as a transition zone between the laser lines with refined closure domains' structure and the nominal 180° main magnetic domains of classical GOES. On Fig. 2c, corresponding to a similar sample submitted to a laser ablation treatment according to the invention, one can see that the size of the spike-like domains near the laser irradiation line is larger than for the preceding processes (average 20 $\mu$m) and that these domains are well oriented, at 180°. These domains might be formed due to the inclusions introduced by the laser treatment. These domains are crucial in magnetization, especially for the applications that require an applied field along the rolling direction of the sheet. Further, these domains should facilitate the reversal magnetization mechanisms near the coercive point and the remanence. Compared to the two preceding processes, the transient magnetic structure involving these spike-like domains is almost not disturbed at all far from or even close to the laser treatment line 20. Only a few lancet 180° closure domains can be observed.

This might be possible in the ablation process especially thanks to the minimization of any thermal effect with almost no heat affected zone. In other words, there might be no other disturbed transition zones between the relatively large spike-like domains and the main 180° domains of this GOES after an ablation treatment.

The quasi-absence or very low number of differently shaped and oriented closure domains within this transition zone might allow a higher mobility of the 180° walls, with nucleation and multiplication of 180° walls partly eased by 180° stray field and the initial well oriented spike-like domains, in the dynamic working conditions.

The direct consequence seemed to be a more efficient refinement effect even of the distant main 180° domains due to the presence of magnetic poles to reduce as much as possible the corresponding stray field energy.

At a larger scale, Fig. 3a (respectively Fig. 3b and Fig. 3c) shows an image of the sample with the magneto-optical indicator film (MOIF) microscopy technique. A measure of the average width <w> along TD of main 180° magnetic domains present in the total images before and after the treatment was made. This measure is obtained thanks to the median spatial frequency of the distribution spectrum of domains width rigorously calculated with the 2D Fast Fourier Transformation of the image contrast along the two RD and TD directions.

In the case of the irradiation treatment (Fig. 3a), the width of the magnetic domains can decrease due to the laser treatment by a factor between 5 and 10% (5,3% for the average width <w> in the case of Fig.3a).

In the case of the scribing treatment (Fig. 3b), the width of the magnetic domains can decrease due to the laser treatment by a factor between 3 and 8% (3,6% for the average width <w> in the case of Fig.3b).

In the ablation case (Fig. 3c), more significant refinement is observed : the average size of magnetic domains can decrease due to the laser treatment by a factor between 10 and 20% (15,8% for the average width <w> in the case of Fig.3b).

This microscopic analysis seems consistent with the results provided with the macroscopic analysis on this grade, which showed a greater loss reduction under a laser ablation process. These figures helps to understand that the effects of an ablation treatment according to the invention ultra-short pulsed laser ablation are fundamentally different from the one of laser scribing or laser irradiation and can be observed experimentally.

Fig. 5a, Fig. 5b and Fig. 5c are the results of optical visualizations of metallurgical aspects of the grooves and heat affected zones with scanning electron microscopy and optical microscopy respectively in the case of an irradiation treatment, a scribing treatment and an ablation treatment. The goals is to determine if an insulating coating or recast metal particles have been deposited inside or/and on the grooves, then to determine the composition of coating an consider its coating process temperature and finally determine the composition and metallurgical aspects with melted and recast wavelets or/and droplets of organic or/and metallic materials within and at the vicinity of the laser spot.

One can see on Fig. 5a that with the LPL irradiation treatment, no groove or almost no groove can be generated, but in some irradiation case, the coating can melt and recast at the same location with a significant visible heat affected zone next to the laser spot. Fig. 5b and Fig. 5c show that the scribing treatment and the ablation treatment are associated with a groove along the laser scanning line. The SPL scribing treatment of Fig. 5b shows that the groove depth is limited (less than 5 $\mu$m in this case) and its bottom is bumpy with melt and recast material, droplets and big air voids. A significant heat affected zone is also visible at the groove borders. In the case of a non thermal ablation according to the invention, the groove depth can be up to 30 $\mu$m, with only a few small air voids but with no recast materials and droplets. No significant heat affected zone can be detected outside the groove with clear and sharp borders. Sometimes, a few typical shards of coating next to the groove can be identified, due to the very strong laser impulses.

The observation and analysis of electron backscatter diffraction (EBSD) images within or at the vicinity of the laser spots give access to the determination of crystallographic axis of edges of grains at the laser spots and the crystallographic axis of eventual rise or nanoparticles of matter redeposited after the laser process. In the case of irradiation or scribing, the EBSD analysis reveals potential crystallographic axis misorientations of the metal but especially at the edges and borders of the grooves and not in the middle spot. On the contrary, the EBSD analysis of ablation according to the invention grooves, no crystallographic modifications outside the laser spot but rather slight misorientations at the bottom of the groove only in the middle spot. This seems to confirm that an USPL induced shock wave generates a very high mechanical pressure able to change the metal crystallography underneath the groove.

These results can be explained as follows : when the laser pulse is too long (in case of scribing or irradiation), the electron-lattice coupling can occur and heat diffuses over a larger volume than that occupied by the laser pulse. In addition, the temperature of the medium gradually increases and the material passes through the liquid state, then vaporizes. The material is ejected in both liquid and vapor phases. Re-solidification of the liquid material can affect the cleanliness of the material removal.

When the duration of the pulse is much lower than the characteristic time of the energy transfer from the electrons to the ions (or equivalently to the lattice), the energy remains concentrated on a volume close to that of the focal spot. The maximum temperature of the electrons is very high, and they quickly communicate their energy to the rest of the material. The material sublimates (no passage through the liquid phase) which allows a very precise and very clean ablation. Obviously, part of the energy is transferred by diffusion to areas which have not been irradiated, but on the one hand, the energy involved in diffusion is in this case much weaker than for long pulses and on the other hand, most of the energy is carried away by the material ejected in the form of gas.

The ultra-short pulse can also terminate before plasma absorption and/or plasma shielding can play a significant role in the interaction. The ionized volume of material is ejected from the substrate via hydrodynamic plasma expansion.

As a consequence, if the pulse duration is of the order of or less than the heat diffusion characteristic time of the electrical steel, the process happens so quickly that a small fraction of the laser energy contributes to heating the adjacent substrate material and almost only the portion that is removed is affected.

There is no or almost no thermally affected zone HAZ, as shown on fig. 1c and fig. 2c and the effects of the non thermal process Ablation, including the significant domains refinement effect of fig. 3c, are insensitive or quite less sensitive to temperature variations than the ones of thermal processes of Irradiation and of SCRibing, as can be observed on :

- Fig. 6a, which represents the power loss variations of a conventional GOES SiFe grade with thickness 0.23 mm after thermal annealing at directly up to 760°C-850°C in a controlled and neutral atmosphere for the same industrial samples laser treated with a commercial irradiation process and then laser treated with the ablation technique. The thermal annealing is maintained during approximately 10 minutes and then the cooling down is ensured sufficiently low (-100°C/hour) and takes several hours to avoid any thermal induced stress during the experiment. Samples C1 to C6 are submitted to the same protocol for statistical reproducibility analysis: first a thermal annealing that cancels the commercial irradiation, then the ablation process according to the innovation and finally a thermal annealing that keeps the impact of ablation process according to the invention. The analysis of the bottom figure shows the thermal annealing makes disappear any domains refinement effect induced by the commercial irradiation process but keep it when the domains refinement is induced by the ablation technique according to the invention. It appears once again clearly on Fig. 6a that the ablation process according to the invention is the only one to achieve loss reduction at all temperatures, induction fields and frequencies in the ranges that have been tested.

- Fig. 6b., which shows the results of thermal retention tests carried out on a conventional GOES SiFe grade with thickness 0.27 mm directly up to 760°C-850°C in a controlled and neutral atmosphere as a function of PPD (drives the peak pressure of the laser induced schock wave LISW) and repetition frequency (drives the penetration depth of LISW), leads to the conclusion that the higher the PPD or/and the repetition frequency fr the stronger the thermal retention capabilities. Additional analysis of the bottom figure shows that the laser impact can be visible at the side opposite to the side on which the laser treatment is applied only for the configurations with either high PPD or high repetition frequency fr. This observation is at the origin of the relationship proposed between the penetration depth p' and the product PPD×fr. This result is consistent with the assumption that the LISW peak pressure Pr and its penetration depth p' participate with the groove to the efficiency of the refinement effect within the complete thickness of the sheet and its thermal retention properties. It is well known that the penetration depth p' is also dependent on the pulse duration $\tau$. As long as the USPL pulse duration $\tau$ is fixed ($\tau$ = 500 fs in the examples presented), it is consistent to consider the dependence of p' on PPD×fr mainly. On the contrary, if the pulse duration is too long, the rising and trailing edges of the pulse are below threshold and only deposit heat to the substrate.

To conclude, in order to achieve an ablation process according to the invention, the laser pulse duration must be of the order of or less than a heat diffusion characteristic time of the electrical steel. This limits significantly the LISW penetration depth p' at one side but also guarantee a non-thermal ablation process at the other side.

The laser pulse duration can be less than two times a heat diffusion characteristic time of the electrical steel. The laser pulse duration can be less than 10 ps (10 picoseconds), less than 1 ps (1 picosecond, $10^{-12}$ s) ; less than 0.9 ps ; less than 0.8 ps ; less than 0.7 ps ; less than 0.6 ps ; less than 0.5 ps ; less than 0.4 ps ; less than 0.3 ps ; less than 0.2 ps ; less than 0.1 ps ; less than 50 fs (50 femtoseconds, $50 \times 10^{-15}$ s) ; less than 40 fs ; less than 20 fs ; less than 10 fs.

The pulse duration isn't sufficient in itself, and must be combined with appropriate peak power density PPD and pulse energy density PED.

The groove depth p can be of the order of magnitude of the spot size Sp.

The spot size Sp can be either smaller than or close to the grain size g. The spot size Sp can be less than 100 $\mu$m, less than 75 $\mu$m, less than 50 $\mu$m, less than 40 $\mu$m, less than 35 $\mu$m, less than 30 $\mu$m, less than 25 $\mu$m, less than 20 $\mu$m, less than 15 $\mu$m, less than 10 $\mu$m.

The discrimination based on these different energy quantities can be explained as follows: Firstly, the Peak Power Density (PPD) determines the strength and speed of the laser impact. The PPD is inversely proportional to the pulse duration and the spot size. At a given pulse energy density PED, the lowest peak power densities correspond to an irradiation regimen. When this density progressively increases, the phenomenon of scribing takes place, and then, at the highest peak power densities, an ablation (vaporization-sublimation effects) occurs, still providing a shorter enough pulse duration (< 10 ps).

Secondly, the pulse energy density PED determines the amount of matter impacted and the phase change per pulse. At a given peak power density, the PED determines the area affected either by heating (case of irradiation) or by a phase change above a certain threshold (case of scribing and ablation) during each pulse.

The laser treatment parameters according to the invention are the following ones :

i) as discussed above, the laser pulse duration is of the order of or less than a heat diffusion characteristic time of the electrical steel; and, this first setting not being sufficient alone:

ii) the peak power density PPD is more than 50 TW/cm$^2$ or/ and the product between the peak power density PPD and the pulses repetition frequency fr (PPD×fr ) is more than or equal to 5000 TW/cm$^2$/ms;

iii) the cumulative energy density per laser pass is comprised between 10 J/cm$^2$ and 3500 J/cm$^2$.

The advantages of the process according to the invention are the following ones :
1) unlike processes based only on the laser pulse duration, the combination of these three characteristics ensures a thermal retention of the treatment effects. In particular, as can be observed on Fig. 6, the ablation treatment according to the invention ensures a thermal retention temperature higher than 700°C ; higher than 720°C; higher than 750°C ; higher than 800°C, up to 850°C, which is not the case of irradiation or scribing treatments.

As a consequence, the process can further comprise a thermal annealing step and/or a further coating step at a temperature lower than the thermal retention temperature after the laser treatment step.

The ablation process according to the invention can be performed either on coated or uncoated metals. In case of coated metals, the coating is removed at the laser spot locations. Thanks to the quality of the grooves, it is not necessary to deposit any other material inside the grooves. It is however possible to apply any liquid insulating coating at high temperature as long as this temperature doesn't overpass the thermal retention temperature, so that it can fill the grooves to protect the material from oxidation and short circuits, without jeopardizing the laser treatment effects (domains refinement effect, loss reduction effect and vibration reduction effect).

Of course, the retention of the treatment effects can be observed with the same techniques as described above, as shown in the case of MOIF on Fig. 6a (bottom). On these figure, the MOIF images of a laser treated electrical steel sample before and after heating at up to 760°C-850°C during 10 minutes and slow cooling down during several hours are shown in case of a commercial irradiation treatment (similar to that of an irradiation or a scribing treatment according to the invention) and various ablation treatments (all treatments at high speed > 70 mm/s and high PPD > 50 TW/cm$^2$) according to the invention. It appears clearly that the domains refinement induced by the commercial irradiation/scribing process cannot be maintained after a thermal annealing up to 760°C-850°C whereas it is clearly not affected at all by the temperature when it is induced by the USPL ablation process according to the invention. Complementary experiments have been carried out to provide more precisely the retention temperature of an irradiation process (which has been shown to be of the order of 450°C), a scribing process (which has been shown to be of the order of 550°C) compared to the ablation process (which has been shown to be of at least 760°C) according to the invention.

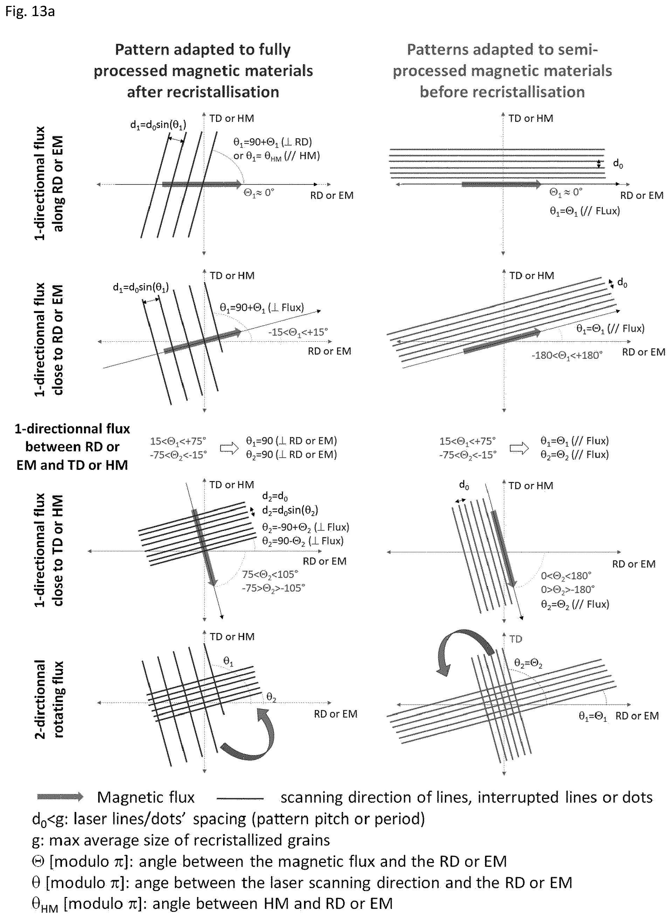

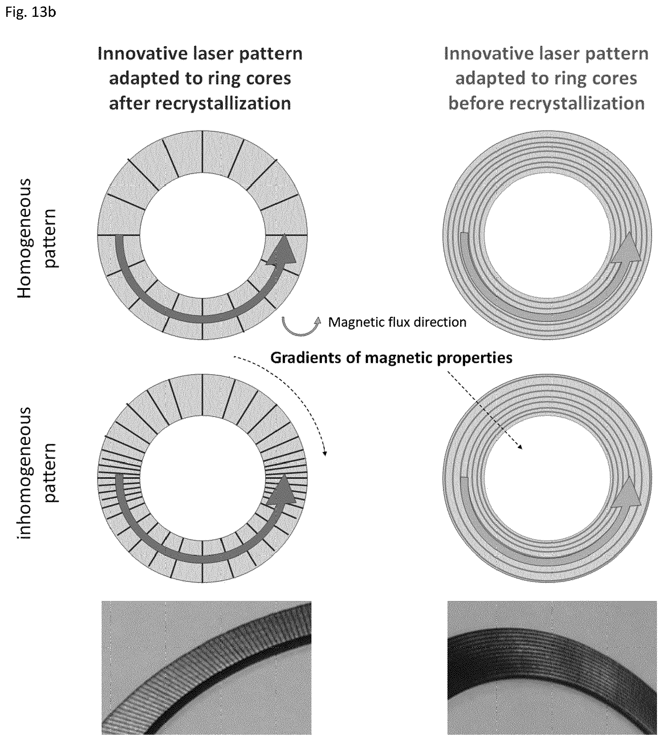

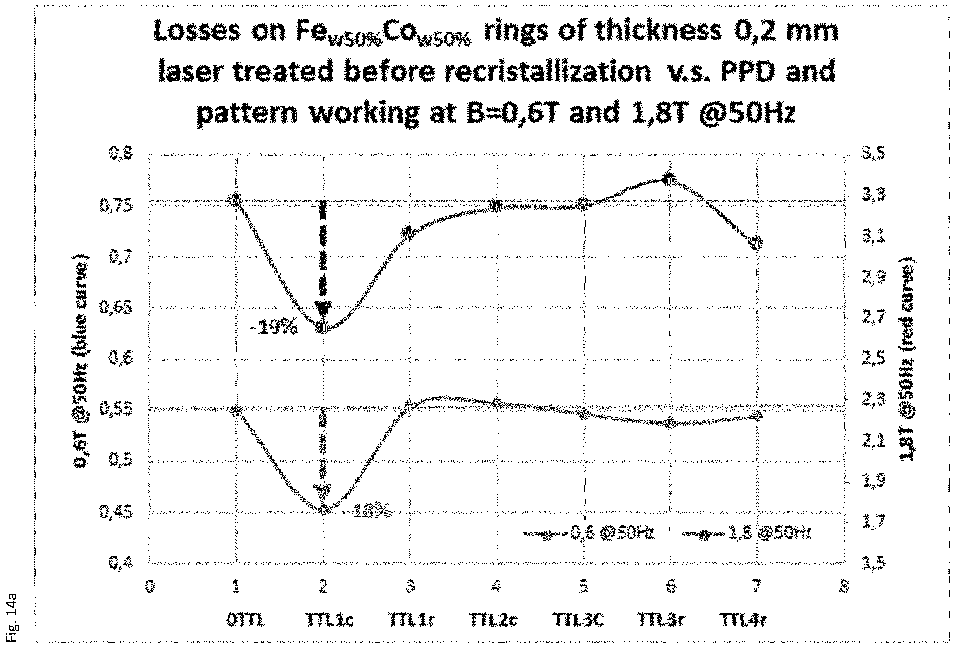

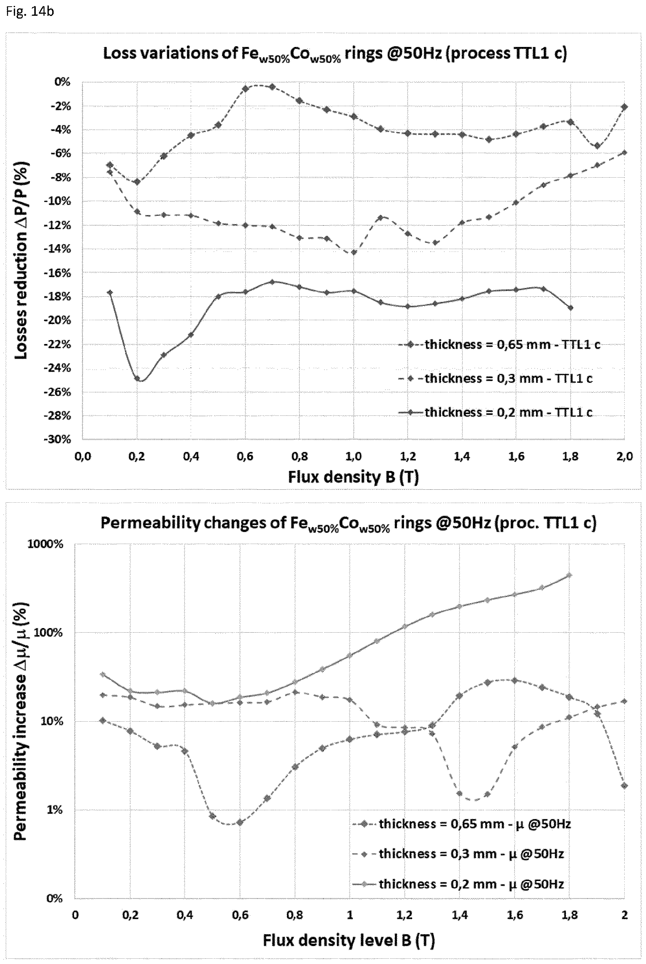

2) The USPL ablation process according to the invention can also be performed either on fully processed material or a semi-processed one that is not completely recrystallized. In fact, another original advantage of the USPL ablation process using very specific and unconventional patterns, specified in fig. 13a (right) and fig. 13b, is its capability to be used before a second recrystallisation step on semi-processed electrical steels or special ferromagnetic alloys. In this specific case, for semi-processed magnetic materials and alloys, the main rule can consist in performing the surface USPL ablation process before the second recrystallization with scanning lines parallel to one intended unidirectional magnetic flux density or parallel to two intended directions of a rotating flux. As shown in fig. 14a, the use of the invention before the second recrystallisation can be beneficial only if the PPD is higher than 50 TW/cm$^2$ and if the laser lines are always parallel to the flux lines rather than along TD, with the smallest line spacing d $\leq$ 250 $\mu$m. Fig. 14b shows that this USPL ablation process implemented before the second recrystallisation according to the invention (with PPD > 50 TW/cm$^2$ and using laser line patterns parallel to the intended magnetic flux density lines) provides both magnetic losses reduction and enormous permeability increase at 50Hz compared to the recrystallized samples with no laser treatment.

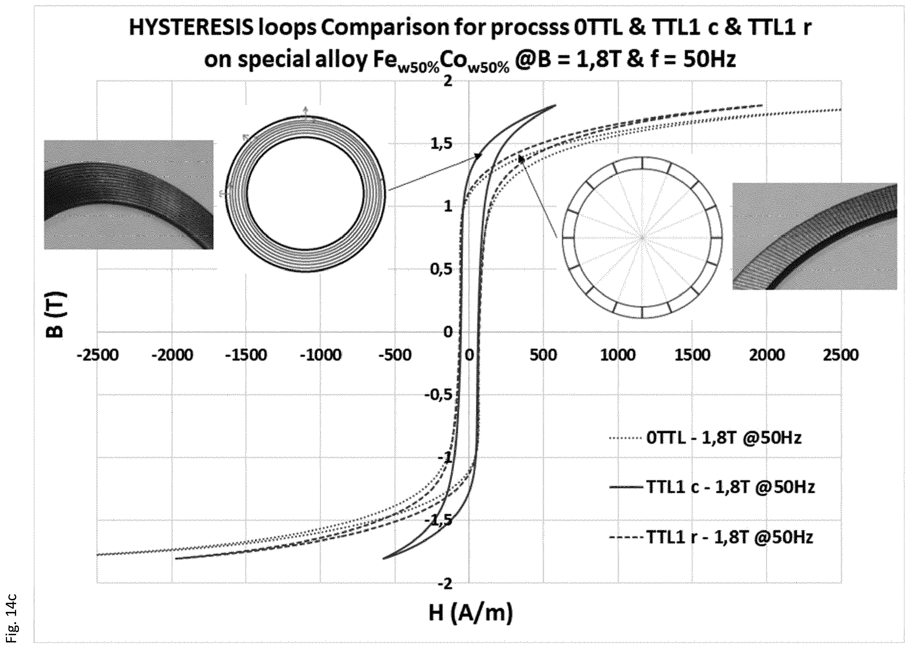

The laser configuration associated with fig. 14a are described in Table 1 hereafter. The thinner the magnetic sheet, the better the loss reduction and the permeability increase factors are. The thicker the magnetic sheet, the higher the PPD or/and the repetition frequency fr shall be. Fig. 14c illustrates the impact of the specific and optimized USPL ablation process implemented before the second recrystallisation on the hysteresis loops of $Fe_{w50\%}Co_{w50\%}$ alloy at a working frequency of 50Hz with an enormous gain (up to 350%) on the magnetic permeability (visually the loop slope), meaning the laser process has been able to guide the second recrystallisation along the laser scanning lines, and thus parallel to the intended magnetic flux density direction.

Table 1 : Laser parameters and patterns of the configurations proposed on semi process ferromagnetic materials such as an FeCo alloy.

| sample | Laser Code | Depth p ($\mu$m) | d ($\mu$m) | Angle $\theta$ | PPD (TW/cm$^2$) |
|---|---|---|---|---|---|
| 0TTL | **N/A** | | | | |
| TTL1 c | **2p16,7v90fr100sp25DL$\theta$d 250_concentric** | **20** | **250** | **//flux** | **70** |
| TTL1 r | **2p16,7v90fr100sp25DL($\theta$ +90) d250_radial** | **20** | **250** | $\perp$**flux** | **70** |
| TTL2 c | **2p16,7v90fr100sp25DL$\theta$d 500_concentric** | **20** | **500** | **// flux** | **70** |
| TTL3 c | **3p5v70fr100sp25DL$\theta$d150 _concentric** | **20** | **150** | **// flux** | **20** |

(continued)

| sample | Laser Code | Depth p ($\mu$m) | d ($\mu$m) | Angle $\theta$ | PPD (TW/cm$^2$) |
|---|---|---|---|---|---|
| TTL3 r | **3p5v70fr100sp25DL($\theta$+90 ) dl50_radial** | **20** | **150** | $\perp$**flux** | **20** |
| TTL4 r | **3p5v70fr100sp25DL($\theta$+90 ) d300_radial** | **20** | **300** | $\perp$**flux** | **20** |

$\theta$ being the angle between the flux direction and the rolling direction (RD) or an easy magnetization direction (EM), DL$\theta$ corresponding to a laser treatment line parallel to the flux and DL(0+90) corresponding to a laser treatment line perpendicular to the flux.

3) The process used for fully processed materials according to the invention is also associated with higher or similar power loss reduction for magnetic flux densities along the rolling direction at all working inductions and frequencies. Typically, depending on the application, the electrical steel can be submitted to induction up to around 2 T and working frequencies up to 20 kHz : such as for example :

In case of DC chokes: one-directional DC flux with high harmonics at low inductions (B < 0.1 T) and high frequencies (f = 3 kHz - 20 kHz) ;
In case of AC chokes: one-directional AC flux with fundamental at intermediate induction (0.1 < B < 0.8 T) and standard nominal frequency (f = 50-60 Hz), with most of the times harmonics (B < 0.1 T and f = 3 kHz - 20 kHz) ;
In case of classical AC voltage transformers: one-directional AC fundamental flux at high inductions (1.5 < B < 1.9 T or 2.1 T) and standard frequency (f = 50-60 Hz) ;
In case of embedded voltage transformers: one-directional AC fundamental flux at high induction level (1.5 < B < 1.9 T or 2.1 T) and standard frequency (f = 50-60 Hz) ;
In case of current transformers and sensors: multi-directional transient flux at low and intermediate induction levels (B < 0.8 T) and characteristic frequencies up to several hundreds of Hz ;
In case of classical rotating electrical machines: rotational AC flux with fundamental at high induction levels (1.5 < B < 1.9 T or 2.1 T) and standard nominal frequency (f = 50-60 Hz) with most of the times harmonics (B < 0.1 T and f up to 3 kHz).

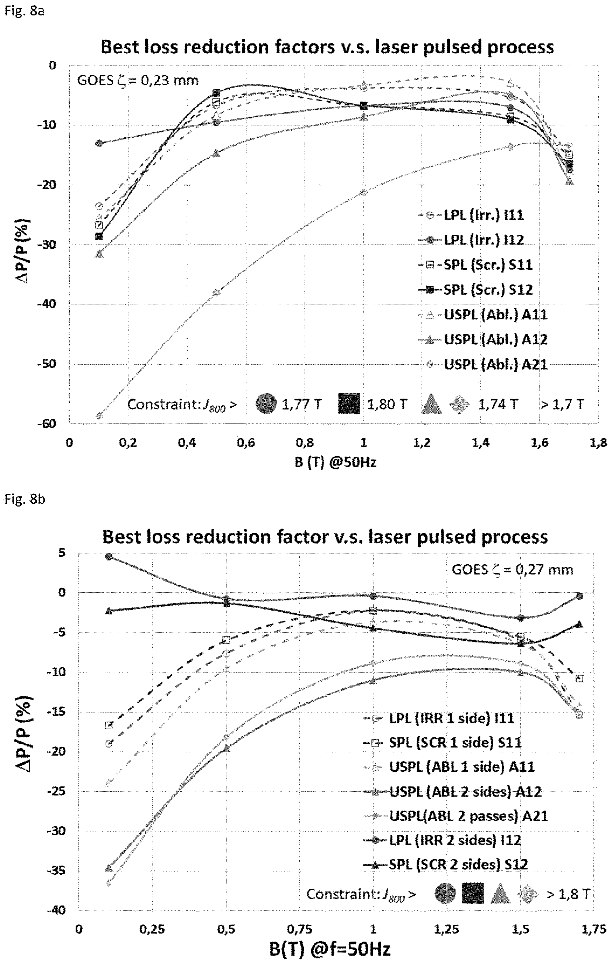

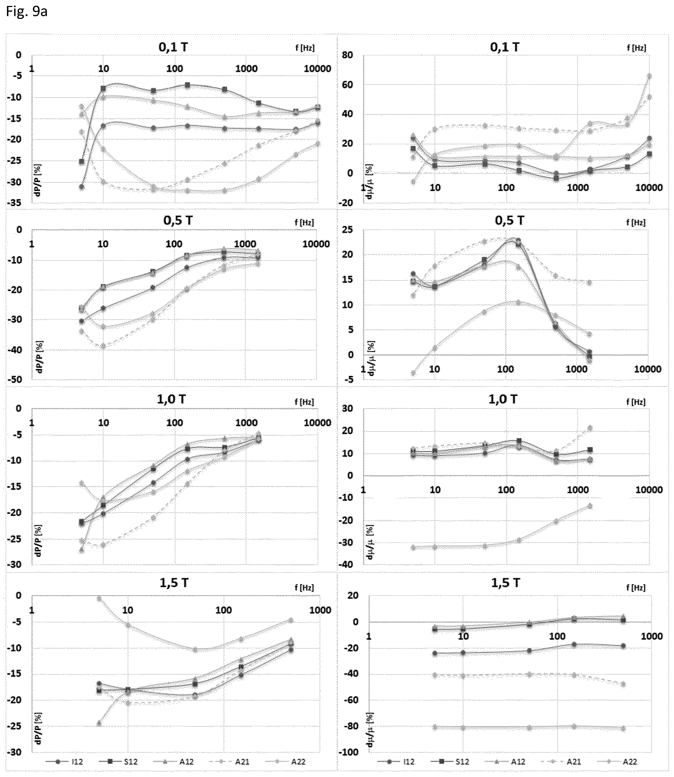

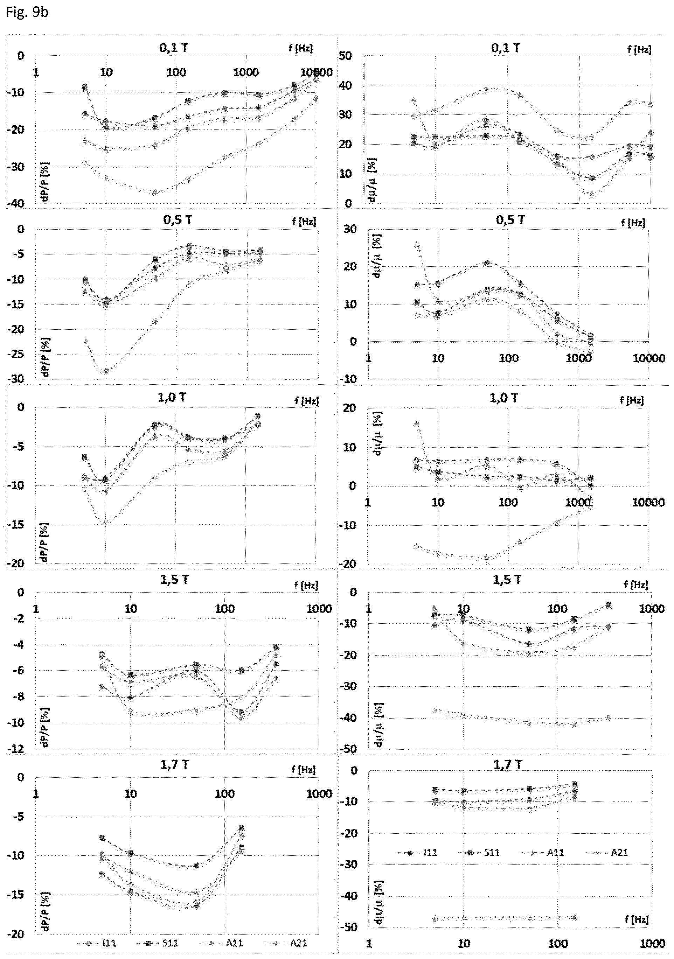

Fig. 8a and fig. 8b represent the relative iron loss reduction $\Delta P/P$ for conventional grades GOES with thicknesses of 0.23 mm and 0.27 mm samples respectively after a laser treatment, relatively to the same sample with no laser treatment for different types of laser treatments (irradiation, scribing, ablation one pass, ablation two passes) as a function of induction field at a working frequency of 50 Hz. As can be seen on fig. 8a and fig. 8b, the iron loss reduction with an ablation process according to the invention is much greater at low inductions (0,1 T ; 0,5 T ; 1 T in particular) than with prior art processes and of the same order at higher induction at this working frequency of 50 Hz. Fig. 9a and fig. 9b represent the relative iron loss reduction $\Delta P/P$ and the relative variation of the magnetic permeability $\Delta\mu/\mu$ for conventional grades GOES with thicknesses of 0.23 mm and 0.27 mm samples respectively after a laser treatment, relatively to the same sample with no laser treatment for different types of laser treatments (irradiation, scribing, ablation one pass, ablation two passes) as a function of the working frequency for various induction fields (0,1 T ; 0,5 T; 1 T; 1,5 T). As can be seen on fig. 9a and fig. 9b, the iron loss reduction with an ablation process according to the invention is much greater at intermediate working frequencies (ranging from around 10 Hz to around 5000 Hz) than with prior art processes and of the same order at other working frequencies.

4) The process according to the invention also allows higher scanning speed for the pulsed laser and as a consequence, an increased productivity of the production line compared to prior art pulsed laser processes. Similar scanning speeds can be achieved only with continuous wave lasers (CWL) for which the physical impact can only be the one of an irradiation type process.

Thanks to the ultra-short pulse duration and the high PPD, the process according to the invention is indeed compatible with the use of very high repetition frequencies fr and as a consequence, high scanning speeds v, using reasonable average laser powers Pw. Typically, the repetition frequency can be greater than 100 kHZ ; 300 kHz, 1000 kHz, 3000 kHz and the scanning speed for one scanning head can be respectively greater than 70 mm/s, 210 mm/s, 700 mm/s, 2100 mm/s, 4500 mm/s.

In a non limitative embodiment, the tables 2, 3 and 4 give examples of laser process parameters leading to high scanning speed compatible with mass production lines. Any laser parameters among $\tau$, Pw, Sp and fr in between the data given and leading to a spot size Sp significantly lower than the grain size g and a couple of CED and PPD satisfying the physical impact requirements and specified in the present document can be chosen for the surface treatment of an electrical steel. Increasing even more the scanning speed by increasing even more the repetition frequency and the laser power, by still keeping a spot size Sp significantly lower than the grain size g and a couple of CED and PPD satisfying the physical impact requirements and specified in the present document can also be chosen for the surface treatment of an electrical steel.

Table 2 gives the whole extrapolated optimized laser parameters for a fixed repetition frequency (100 kHz and 1000 kHz) and a fixed spot size Sp = 25 $\mu$m. Extrapolation has been performed by varying the pulse duration between 100 fs and 700 fs, corresponding PPD and CED, which leads to the LISW peak pressure and scanning speed variations, but by keeping both the same PED and the same product PPD$\times$CED constant per laser pass. This table shows that, for a given repetition frequency and a given laser power, reducing the pulse width $\tau$ enables to increase the laser scanning speed v and thus higher production rate of the electrical steel.

Table 2 : influence of the pulse width on the scanning speed by keeping the same PED and product PPD$\times$CED per laser pass for a given spot size (Sp = 25 $\mu$m) and given repetition frequencies (fr = 100 kHz and 1000 kHz).

| $\tau$ (fs) | Pw (W) | v (mm/s) | fr (kHz) | PED (J/cm$^2$) | CED (J/cm$^2$) | PPD (TW/cm$^2$) |
|---|---|---|---|---|---|---|
| | | | | | | |
| 700 | 14 | 64 | 100 | 28,5 | 1109 | 41 |
| 500 | 14 | 90 | 100 | 28,5 | 792 | 57 |
| 300 | 14 | 150 | 100 | 28,5 | 475 | 95 |
| 200 | 14 | 225 | 100 | 28,5 | 317 | 143 |
| 100 | 14 | 450 | 100 | 28,5 | 158 | 285 |
| | | | | | | |
| 700 | 140 | 640 | 1000 | 28,5 | 1109 | 41 |
| 500 | 140 | 900 | 1000 | 28,5 | 792 | 57 |
| 300 | 140 | 1500 | 1000 | 28,5 | 475 | 95 |
| 200 | 140 | 2250 | 1000 | 28,5 | 317 | 143 |
| 100 | 140 | 4500 | 1000 | 28,5 | 158 | 285 |

As can already been seen in Table 2, another solution to increase the speed is to increase proportionally the Laser power Pw and the repetition frequency fr, by still keeping the same PED, CED and PPD.

Table 3 gives the whole extrapolated optimized laser parameters for fixed coupled CED and PPD. Extrapolation has been performed for one given spot size (Sp = 25 $\mu$m), two given pulse durations (300 fs and 500 fs) by varying the laser average power Pw and repetition frequency fr, which leads to the scanning speed v variation, but still keeping the PED, the CED per laser pass and the PPD constant. Table 3 shows clearly that at given pulse width, cumulative energy density and peak power density, it is possible to improve the laser scanning speed v and hence the production rate by increasing the pulse repetition frequency fr and the laser average power Pw proportionally.

Table 3: influence of the repetition frequency fr and laser power Pw on the scanning speed v by keeping the same PED, CED per laser pass and PPD at given spot size (Sp = 25 $\mu$m) and pulse durations ($\tau$ = 300 fs or 500 fs).

| $\tau$ (fs) | Pw (W) | v (mm/s) | fr (kHz) | PED (J/cm$^2$) | CED (J/cm$^2$) | PPD (TW/cm$^2$) |
|---|---|---|---|---|---|---|
| | | | | | | |
| 500 | 20 | 125 | 150 | 27 | 815 | 54 |
| 500 | 40 | 250 | 300 | 27 | 815 | 54 |
| 500 | 60 | 375 | 450 | 27 | 815 | 54 |
| 500 | 80 | 500 | 600 | 27 | 815 | 54 |
| 500 | 100 | 625 | 750 | 27 | 815 | 54 |
| 500 | 120 | 750 | 900 | 27 | 815 | 54 |

(continued)

| τ (fs) | Pw (W) | v (mm/s) | fr (kHz) | PED (J/cm$^2$) | CED (J/cm$^2$) | PPD (TW/cm$^2$) |
|---|---|---|---|---|---|---|
| 500 | 140 | 875 | 1050 | 27 | 815 | 54 |
| 500 | 200 | 1250 | 1500 | 27 | 815 | 54 |
| 500 | 300 | 1875 | 2250 | 27 | 815 | 54 |
| 500 | 500 | 3125 | 3750 | 27 | 815 | 54 |
| | | | | | | |
| 300 | 20 | 208 | 150 | 27 | 489 | 91 |
| 300 | 40 | 417 | 300 | 27 | 489 | 91 |
| 300 | 60 | 625 | 450 | 27 | 489 | 91 |
| 300 | 80 | 833 | 600 | 27 | 489 | 91 |
| 300 | 100 | 1042 | 750 | 27 | 489 | 91 |
| 300 | 120 | 1250 | 900 | 27 | 489 | 91 |
| 300 | 140 | 1458 | 1050 | 27 | 489 | 91 |
| 300 | 200 | 2083 | 1500 | 27 | 489 | 91 |
| 300 | 300 | 3125 | 2250 | 27 | 489 | 91 |
| 300 | 500 | 5208 | 3750 | 27 | 489 | 91 |

Table 4 gives the whole extrapolated laser parameters for fixed PPD and small change of scanning speed at a significant high value. Extrapolation has been performed for a given spot size (Sp = 25 μm) and given pulse duration (300 fs or 500 fs), by varying the laser average power Pw and the repetition frequency fr but with very little change in the scanning speed v, which leads to first the CED variations (1 pass and 2 passes) that are correlated with the groove depth variations between 2 to 40 μm) and the PPD at a nominal CED, that drives the LISW peak pressure (between 50 and 120 TW/cm$^2$).

Table 4: influence of the repetition frequency fr and laser power Pw on either the CED by keeping the same PED and PPD (72 and 120 TW/cm$^2$) or the PED and PPD by keeping the same CED (1 or 2 passes) (for given spot size (Sp = 25 μm), pulse durations (τ = 300 fs and 500 fs) and similar high scanning speeds v).

| τ (fs) | Pw (W) | v (mm/s) | fr (kHz) | PED (J/cm$^2$) | CED 1 pass (J/cm$^2$) | CED 2 passes (J/cm$^2$) | PPD (TW/cm$^2$) |
|---|---|---|---|---|---|---|---|
| | | | | | | | |
| 500 | 160 | 5000 | 910 | 36 | 163 | 326 | 72 |
| 500 | 242 | 5000 | 1376 | 36 | 247 | 494 | 72 |
| 500 | 367 | 5000 | 2081 | 36 | 374 | 748 | 72 |
| 500 | 452 | 5000 | 2559 | 36 | 460 | 921 | 72 |
| 500 | 556 | 5000 | 3147 | 36 | 566 | 1133 | 72 |
| 500 | 556 | 4000 | 3147 | 36 | 708 | 1416 | 72 |
| 500 | 556 | 3000 | 3147 | 36 | 944 | 1888 | 72 |
| 500 | 556 | 2000 | 3147 | 36 | 1416 | 2832 | 72 |
| | | | | | | | |
| 300 | 160 | 5000 | 910 | 36 | 163 | 326 | 120 |
| 300 | 242 | 5000 | 1376 | 36 | 247 | 494 | 120 |
| 300 | 367 | 5000 | 2081 | 36 | 374 | 748 | 120 |
| 300 | 452 | 5000 | 2559 | 36 | 460 | 921 | 120 |

(continued)

| τ (fs) | Pw (W) | v (mm/s) | fr (kHz) | PED (J/cm$^2$) | CED 1 pass (J/cm$^2$) | CED 2 passes (J/cm$^2$) | PPD (TW/cm$^2$) |
|---|---|---|---|---|---|---|---|
| 300 | 556 | 5000 | 3147 | 36 | 566 | 1133 | 120 |
| 300 | 556 | 4000 | 3147 | 36 | 708 | 1416 | 120 |
| 300 | 556 | 3000 | 3147 | 36 | 944 | 1888 | 120 |
| 300 | 556 | 2000 | 3147 | 36 | 1416 | 2832 | 120 |
| | | | | | | | |
| 500 | 556 | 4000 | 3147 | 36 | 708 | 1416 | 72 |
| 500 | 834 | 6000 | 6294 | 27 | 708 | 1416 | 54 |
| 300 | 556 | 4000 | 3147 | 36 | 708 | 1416 | 120 |
| 300 | 834 | 6000 | 6294 | 27 | 708 | 1416 | 90 |
| 300 | 1112 | 8000 | 12588 | 28 | 708 | 1416 | 60 |

5) The process according to the invention enables better noise reduction than prior art processes. Noise reduction is a consequence of the ability to damp the magnetic induced strain and can be quantified by the percentage of magnetic induced strain weakening leading to vibrations and noise reduction.

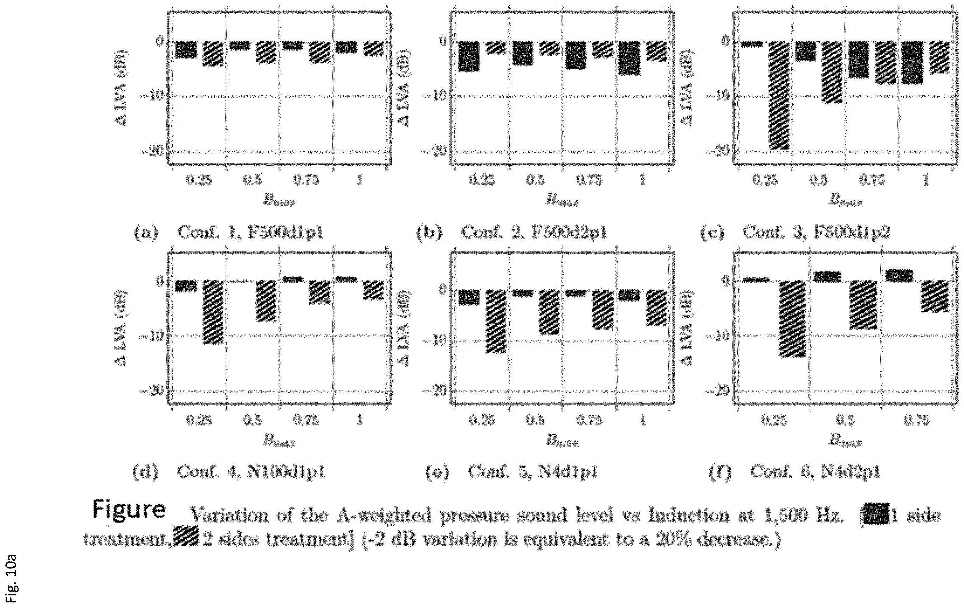

This can be observed on Fig. 10a, which shows an estimation of magnetic vibro-acoustic noise reduction factors obtained for a conventional GOES with a thickness ζ = 0.27 mm for various harmonic components after irradiation, scribing and ablation processes. Ablation configuration 2 is the best for a single-side treatment and ablation configuration 3 is the best for a double-sided laser treatment. The main reason for this result is that the non-thermal ablation process generates fewer misoriented domains which maximizes the volume fraction of well-oriented domains at 180°. This leads to the minimization of magnetic induced strain (apparent magnetostriction) and the maximization of magneto-mechanical time delay due to the Lorentz force.

The ablation parameters at low speed associated with each of the reference samples of Fig. 10a are described in Table 5 hereafter:

Table 5 : List of laser ablation configuration used to compare the impact of USPL process and magnetic induced noise with irradiation and scribing at low scanning speed.

| Sample | τ | Pw(W) | v (mm/s) | Sp (μm) | fr (kHz) | d (mm) | Npass |
|---|---|---|---|---|---|---|---|
| F500dlpl | 500 fs | 2 | 5 | 50 | 10 | 3000 | 1 |
| F500d2pl | 500 fs | 2 | 5 | 50 | 10 | 5000 | 1 |
| F500dlp2 | 500 fs | 2 | 5 | 50 | 10 | 3000 | 2 |
| N100d1p1 | 100 ns | 1 | 5 | 50 | 40 | 3000 | 1 |
| N4dlpl | 4 ns | 1 | 5 | 50 | 100 | 3000 | 1 |
| N4d2p1 | 4 ns | 1 | 5 | 50 | 100 | 5000 | 1 |

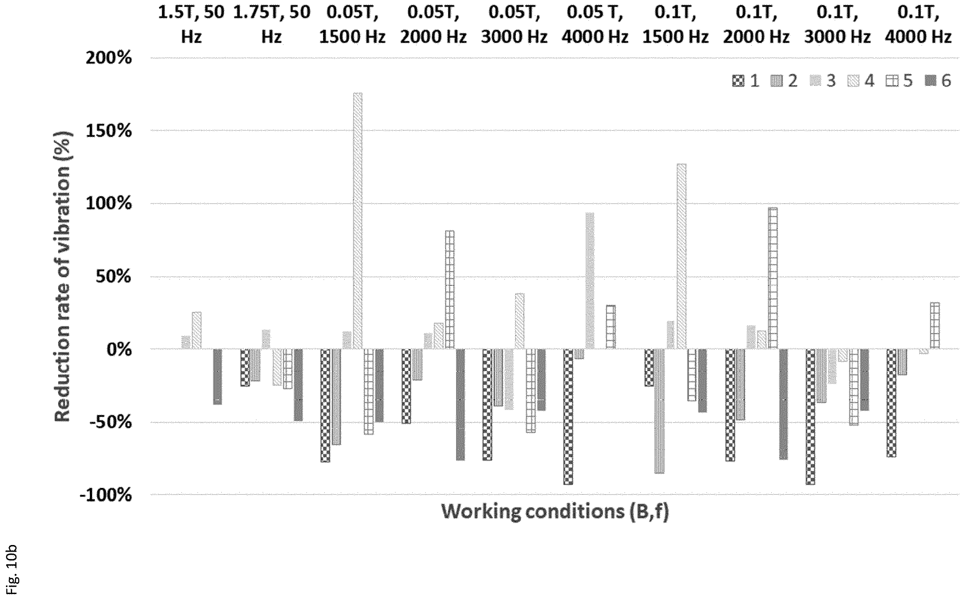

Fig. 10b shows the results of an optimization of USPL ablation parameters at high PPD and high repetition frequencies (allowing a high scanning speed) regarding the magnetic induced vibrations. The parameters associated with each of the reference samples are described in Table 6 hereafter, the pulse width being in each case of 500 fs, the spot size of 25 μm, the repetition frequency of 100 kHz . The use of powerful and fast lasers requires to pay attention to the pattern to reduce both the magnetic losses and the magnetic induced vibrations and consequent noise.

Table 6 : List of laser ablation configuration used to optimize the USPL process for the reduction of magnetic induced noise at high scanning speed with PPD > 50 TW/cm$^2$.

| n° | Laser Code | Npass | Pw (W) | v (mm/s) | θ | d (mm) | PPD (TW/cm$^2$) | CED (J/cm$^2$) |
|---|---|---|---|---|---|---|---|---|
| 6 | F500_1p11,5v75sp2 5fr100DL90d3000 | 1 | 11,5 | 75.0 | DL 90 | 3000 | 48 | 780 |
| 5 | F500_2p14v90sp25f r100DL90d3000 | 2 | 14 | 90.0 | DL 90 | 3000 | 57 | 1584 |
| 4 | F500_1p14v70sp25f r100DL90d3000 | 1 | 14 | 70.0 | DL 90 | 3000 | 57 | 1020 |
| 3 | F500_1p14v70sp25f r100DL90d4000 | 1 | 14 | 70.0 | DL 90 | 4000 | 57 | 1020 |
| 2 | F500_1p14v70spZ5f r100DL90d5000 | 1 | 14 | 70.0 | DL 90 | 5000 | 57 | 1020 |
| 1 | F500_2p14v70sp25f r100DL90d5000 | 2 | 14 | 70.0 | DL 90 | 5000 | 57 | 2040 |

6) Last, the process according to the invention is also associated with higher or at least similar power loss reduction for magnetic flux densities along the transverse direction or along a direction forming an angle θ with the rolling direction, with the easy magnetization direction or the transverse direction or for rotating magnetic flux densities at all working inductions and frequencies. Typically, depending on the application, the electrical steel can be submitted to induction up to around 2 T and working frequencies up to 20 kHz:

- Corners of DC, AC chokes and transformers: magnetic induction angle 0 < θ < 90°
- Current transformers and sensors: magnetic induction angle -180° < θ < +180°
- Rotating electrical machines: one-directional flux density in the teeth of stator and rotor, rotating magnetic flux density in the yokes of stator and rotor.

Fig. 11a and Fig. 11b compare the performances of LPL irradiation or SPL scribing process and the USPL ablation process according to the invention in case of rotating flux with components either in RD and in TD. Both at 50 Hz for various induction levels (Fig. 11a) and at 1T for various frequencies (Fig. 11b), there is an USPL ablation configuration with a grid pattern that provides much more loss reduction than for LPL and SPL processes. For these figures, the peak power density of the ablation process was approximately equal to 65 TW/cm$^2$. The grid pattern is formed by the optimal pattern found adapted to magnetic flux densities along RD and the optimal one found adapted to magnetic flux densities along TD. Fig 13a (left) gives the key rules to choose the laser pattern the most adapted to fully processed electrical steels and ferromagnetic alloys, especially GOES, as a function of the magnetic flux density direction relative to the rolling direction (RD) or an easy magnetization direction (EM):

- The laser scanning direction shall be parallel to the (TD) or (HM) when the magnetic flux density is along the (RD) or (EM).
- The laser scanning direction shall be perpendicular to the magnetic flux density direction, i.e. make a small angle with the (TD) or (HM) when the magnetic flux density makes a small angle with the (RD) or (EM).
- The laser scanning direction shall be parallel to the (TD) or (HM) when the magnetic flux density makes a significant angle with the (RD) or (EM).
- The scanning direction shall either be parallel to the (RD) or (EM) or make a small angle with the (RD) or (EM) when the magnetic flux density is along the (TD) or (HM). The pattm pitch or period (lines' or dots' spacing) shall be reduced for small angles with the (RD) or (EM).
- The laser scanning direction shall be perpendicular to the magnetic flux density direction, i.e. shall make a small angle with the (RD) or (EM) when the magnetic flux density makes a small angle with the (TD) or (HM). The pattern pitch shall be reduced for small angles with the (RD) or (EM).
- The pattern can be a grid with laser scanning directions parallel to the (TD) or (HM) for the first and making a small angle with the (RD) or (EM) for the second when the magnetic flux density is rotating. The specific angles and pattern pitches or periods (lines' or dots' spacings) have to be chosen as a function of the the flux density magnitude and frequency along each direction.

In a particular embodiment, the laser wavelength is chosen so that the absorption coefficient of the electrical steel is more than 30% ; more than 40% ; more than 50% so that a significant part of the energy of the laser beam contributes to the ablation process rather than the optical reflection.

In a particular embodiment, the wavelength is less than 1100 nm.

In a particular embodiment, the spot size is significantly smaller than the grain size g of fully processed magnetic materials, less than 100 $\mu$m, less than 75 $\mu$m, less than 50 $\mu$m, less than 40 $\mu$m, less than 35 $\mu$m, less than 30 $\mu$m, less than 25 $\mu$m, less than 20 $\mu$m, less than 15 $\mu$m, less than 10 $\mu$m so that the grains are not damaged.

In a particular embodiment, the spot size is of the order of magnitude of the grain size g of semi-processed magnetic materials, higher than 100 $\mu$m, close to 100 $\mu$m, close to 75 $\mu$m, close to 50 $\mu$m, close to 40 $\mu$m, close to 35 $\mu$m, close to 30 $\mu$m, close to 25 $\mu$m, close to 20 $\mu$m, close to 15 $\mu$m, close to or less than 10 $\mu$m that the grains are significantly impacted.

In a particular embodiment, the process according to the invention comprises at least two laser passes.

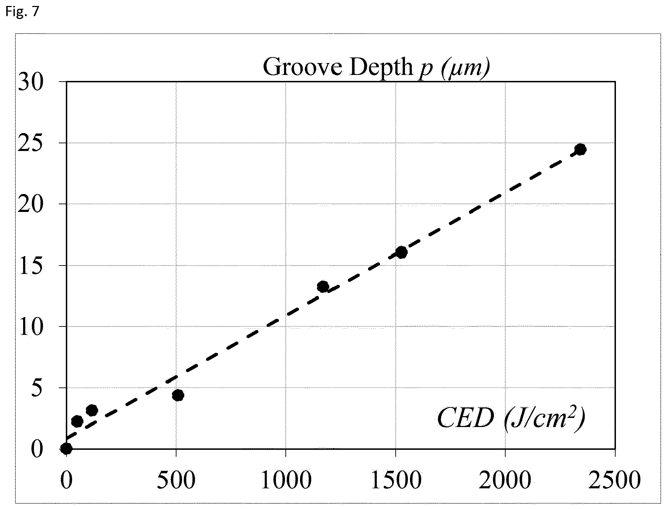

The cumulative energy density (CED) represents the sum of the energies of all the delivered pulses at a single point taking into consideration the overlap between pulses. At a given pulse energy density, this enables counting the number of equivalent pulses seen by each laser-treated spot on the metal. In case of Npass treatment the CED is Npass times the CED of one pass. Figure 7 represents the groove depth (in micrometers) as a function of the CED (in J/cm$^2$), in the case of an ablation treatment with $\tau$ = 500 fs. As long as each pulse energy PED is higher than the ablation threshold TED, this result depends marginally on PPD. The ablation efficiency can either be reduced slightly for higher PPD. The scanning speed and repetition frequencies are varied to vary CED. This figure shows that the groove depth is determined by the quantity of material ablated that is strongly correlated with (approximately proportional to) the cumulated energy CED (dashed line). In order to generate a sufficient efficient groove without inducing too much thermal effect that is detrimental to both the magnetic performances and the electrical sheet deformation, the inventors have determined by experiments that the total cumulated energy density for the whole laser passes shouldn't overpass 4500 J/cm$^2$ ; 4000 J/cm$^2$ ; 3500 J/cm$^2$, 3000 J/cm$^2$ ... depending on the sheet thickness (0.35 mm; 0.30 mm; 0.27 mm; 0.23 mm ...respectively); otherwise, a critical sheet deformation occurs. The thinner the sheet, the lower the upper limit of total CED shall be. The thicker the sheet, the higher the upper limit can be. The number of passes Npass can be chosen according to the PED and CED criteria and the wished depth, but also depending on a target iron loss reduction and/ or on a target vibration reduction and/or on a target magnetic permeability after laser ablation treatment.

In a particular embodiment, if the process comprises at least two passes, the first pass corresponds to a laser treatment of a first side of the electrical steel sheet and at least one of the following passes corresponds to a laser treatment of a second side of the electrical steel sheet. In an alternative embodiment, the laser treatment is applied on the same side of the electrical sheet for all the passes.

The number of passes and their repartition on the two sides of the electrical sheet depends on the target performances, which in turn depends on the application of the electrical steel sheet. For example, one can see on fig. 9a and fig. 9b that if the working induction field amplitude is around 0,1 T and the working frequency is around 800 Hz two passes on both sides correspond to a relative iron loss reduction of 30-40%, two passes on only one same side correspond to a relative iron loss reduction of 20-30% and two passes, with each pass on one side, correspond to a relative iron loss reduction of 10-20%. Meanwhile, two passes at both sides correspond to a relative magnetic permeability increase of 20-30%, two passes on only one side correspond to a relative increase of permeability of 30-40%, while two passes, with each pass on one side, correspond to a relative magnetic permeability decrease of 10-20%, which is doubly advantageous. A two passes on both sides can be efficient and useful especially for harmonics with low or medium induction levels (< 1T) and high frequencies (> 50Hz), the same two passes configuration on the same side would be preferable at higher inductions (>1T) and standard frequencies (f = 50-60 Hz).

However, fig. 9a and fig. 9b show that the choice of the laser process parameters and number of passes and their repartition must be tailor-made and depends on the application of the electrical steel.

In a particular embodiment, the pattern formed by the laser scanning line can be chosen depending on the future working conditions in the rolling direction RD or in the easy magnetization direction EM.

In a particular embodiment, the laser scanning lines can be perpendicular to the rolling direction RD or parallel to a hard magnetization direction HM of the electrical steel sheet.

In a particular embodiment, the laser scanning lines can be perpendicular to an intended flux density direction forming an angle $\Theta$ with to the rolling direction RD or an easy magnetization direction EM of the electrical steel sheet.

In a particular embodiment, the laser scanning lines can be parallel to or form an angle $\Theta$ with the rolling direction RD or an easy magnetization direction EM of the electrical steel sheet.

In another particular embodiment, the laser scanning lines can be perpendicular to the rolling direction RD or an easy magnetization direction EM or or/and perpendicular to the transverse direction TD or a hard magnetization direction HM. They can also form an angle comprised between 0° and 90° either with the rolling direction RD or an easy magnetization direction EM or/and with the transverse direction TD or a hard magnetization direction HM. This choice depends on whether the flux is one-directional or rotating, the direction of the magnetic induction lines, the axis ratio between the flux density along the rolling direction RD or an easy magnetization direction EM and the one along the transverse direction TD or a hard magnetization direction HM and the working conditions in terms of flux magnitudes and frequencies.

For example, the use of USPL ablation lines along TD with high PPD clearly provides more reduction loss for magnetic flux density along TD either by still reducing the losses in RD.

For example, as can be observed on Fig. 12a, it can be of advantage to treat along scanning lines that are parallel to or slightly tilted relative to the rolling direction rather than to the transverse direction, as described in prior art, since such lines are associated with a reduction of losses (squares) if magnetic flux density is along TD but with a compromise if a loss reduction is also required for a magnetic flux density along RD.

For example, as can be observed on Fig. 12b, it can be of advantage to slightly tilt the lines relative to the rolling direction rather than to the transverse direction, as described in prior art, with an optimum regarding the loss reduction along TD, but sacrificing the losses in RD.

In another embodiment, when the magnetic flux density lines are parallel to the transverse direction TD or a hard magnetization direction HM, for example in the corners of transformers, yokes of transformers and electrical machines, teeth of some electrical machines, another pattern can be applied, with laser lines parallel to the Rolling Direction RD or to an easy magnetization direction EM and line spacing smaller than the one usually used for laser lines parallel to the transverse direction TD or the ones parallel to a hard magnetization direction HM. In this case, the process contributes to the generation of located closure domains with magnetization components along the transverse and normal directions or the hard magnetization directions HM rather than the main domains refinement effect. This pattern might be well adapted for the use of Grain Oriented Electrical Steels (GOES) and other textured magnetic materials or alloys with relatively big and oriented grains.

In another embodiment, the process can comprise a laser treatment with both laser scanning lines parallel to the Rolling Direction RD or to an easy magnetization direction EM and laser scanning lines parallel to the transverse direction TD or to a hard magnetization direction HM so as to make a grid. This pattern might be well adapted for rotating fluxes rather than one directional fluxes in the Rolling Direction RD or in the (EM), or in the transverse direction TD or a hard magnetization direction HM, like in electrical machine yokes for example. The lines parallel to the Rolling Direction RD or to the easy magnetization direction EM can be applied on another same side than the lines parallel to the transverse direction TD or the hard magnetization direction HM, or all the lines can be applied to the same side.

In yet another embodiment, the laser lines make a small angle with the Rolling Direction RD or with the easy magnetization direction EM or make a small angle with the transverse direction TD or with a hard magnetization direction HM, rather than (as described in prior art) parallel to the transverse direction TD only. In particular, when the magnetic flux density lines are in the transverse direction (examples: corners of transformers, yokes of transformers and electrical machines, teeth of some electrical machines ...), this embodiment of the process allow to take advantages of two effects of the laser treatment: the generation of located closure domains polarized in the transverse direction TD or along a hard magnetization direction HM and the refinement effect of main well oriented domains in the Rolling Direction RD or along an easy magnetization direction EM thanks to magnetic poles that cannot be induced when the laser scanning lines are parallel to the Rolling Direction RD or to the easy magnetization direction EM only. The slightly tilted scanning lines can be applied on only one side of the electrical steel sheet or on both sides. The angle between a laser scanning line and the rolling direction can be strictly positive and less than 30°, less than 20°, less than 15°, less than 10°, less than 8°, less than 5°.

The laser pattern and its orientation on the electrical steel sheet depend on both the magnetic flux density direction relative to the rolling direction RD or an easy magnetization direction EM and the working conditions for the induction level B and the frequency f, which in turn depends on the application of the electrical steel sheet. Fig 13a (left) gives the key rules to choose the laser pattern most adapted to fully processed electrical steels and ferromagnetic alloys, especially GOES, as a function of the magnetic flux density direction relative to the rolling direction RD or an easy magnetization direction EM.

The following solutions implemented on prototypes are proposed for each typical use-case example, made of a fully processed electrical steel (GOES type) already recrystallized:

Example 1: DC or AC 1-phase choke inductor made of a squared magnetic circuit with at least four airgaps, two magnetic columns and two yokes made of magnetic strips cut such that the magnetic flux density is mainly along the RD and with four corners. The nominal working condition of the AC 1-phase choke inductor contains a fundamental at B = 0.4-0.8 T at f=50Hz with high harmonics for both DC and AC at B = 0-0.1 T at f=5-20 kHz.

- The middle of both the columns and the yokes can be laser treated with F500p12.5v70sp25fr100DL90d3000_2sides (PPD=51 TW/cm$^2$, CED=910 J/cm$^2$ per side) when made of 0.23 mm thick strips, with F500p14v70sp25fr100DL90d4000_2sides (PPD=57 TW/cm$^2$, CED=1020 J/cm$^2$ per side) when made of 0.27 mm thick strips and with F500p16v70sp25fr100DL90d5000_2sides (PPD=65 TW/cm$^2$,

CED=1164 J/cm$^2$ per side) when made of 0.30 mm thick strips.

- The corners can be laser treated either with the same configuration as the one used for the columns or the yokes, or be laser treated with F500p12.5v70sp25fr100DL90d1000_2sides (PPD=51 TW/cm$^2$, CED=910 J/cm$^2$ per side) when made of 0.23 mm thick strips, with F500p14v70sp25fr100DL90d1500_2sides (PPD=57 TW/cm$^2$, CED=1020 J/cm$^2$ per side) when made of 0.27 mm thick strips and with F500p16v70sp25fr100DL90d2000_2sides (PPD=65 TW/cm$^2$, CED=1164 J/cm$^2$ per side) when made of 0.30 mm thick strips. Another more adapted solution is to apply the rules described in Fig. 13 (left) with a laser configuration corresponding to a code of the type XXXDLθXXX_2sides

- The vicinity of airgaps (distant 10-30 mm from the airgap) can be either no laser treated or laser treated with the same configuration as the one used for the corners.

Example 2: AC 3-phases choke inductor made of a squared 8 shaped magnetic circuit with at least six airgaps, three magnetic columns and two yokes made of magnetic strips cut such that the magnetic flux density is mainly along the RD and with four L shape corners and two T shape corners. The nominal working condition of the AC 3-phases choke inductor contains a fundamental at B = 0.4-0.8 T at f=50Hz with high harmonics for both DC and AC at B = 0-0.1 T at f=5-20 kHz.

- The middle of both the columns and the yokes can be laser treated with the same laser configuration as the one used for the Example 1.
- The L shape corners can be laser treated either with the same configuration as the one used for the Example 1.
- The T shape corners can be laser treated either with the same configuration as the one used for the yokes or thanks to the rules described in Fig. 13 (left).
- The vicinity of airgaps (distant 10-30 mm from the airgap) can be either no laser treated or laser treated with the same configuration as the one used for the corners.

Example 3: AC 1-phase transformer made of a squared magnetic circuit with two magnetic columns and two yokes made of magnetic strips cut such that the magnetic flux density is mainly along the RD and with four corners. The nominal working condition of the AC 1-phase transformer contains a fundamental at B = 1.7-1.8 T at f=50Hz.

- The middle of both the columns and the yokes can be laser treated with F500p12.5v90sp25fr100DL90d3000_1side or 2sides (PPD=51 TW/cm$^2$, CED=710 J/cm$^2$ per side) when made of 0.23 mm thick strips, with F500p14v90sp25fr100DL90d4000_1side or 2 sides (PPD=57 TW/cm$^2$, CED=800 J/cm$^2$ per side) when made of 0.27 mm thick strips and with F500p16v90sp25fr100DL90d5000_1 side or 2sides (PPD=65 TW/cm$^2$, CED=900 J/cm$^2$ per side) when made of 0.30 mm thick strips.
- The corners can be laser treated either with the same configuration as the one used for the columns or the yokes, or be laser treated with F500_2p12.5v90sp25fr100DL90d1000_1side (PPD=51 TW/cm$^2$, CED=1420 J/cm$^2$) when made of 0.23 mm thick strips, with F500_2p14v90sp25fr100DL90d1500_1side (PPD=57 TW/cm$^2$, CED=1600 J/cm$^2$) when made of 0.27 mm thick strips and with F500_2p16v90sp25fr100DL90d2000_1side (PPD=65 TW/cm$^2$, CED=1800 J/cm$^2$) when made of 0.30 mm thick strips. Another more adapted solution is to apply the rules described in Fig. 13 (left) with the same configurations but corresponding to a code of the type XXXDLθXXX.

Example 4: AC 3-phases transformer made of a squared 8 shaped magnetic circuit with three magnetic columns and two yokes made of magnetic strips cut such that the magnetic flux density is mainly along the RD and with four L shape corners and two T shape corners. The nominal working condition of the AC 3-phases transformer contains a fundamental at B = 1.7-1.8 T at f=50Hz.

- The middle of both the columns and the yokes can be laser treated with the same laser configuration as the one used for the Example 3.
- The L shape corners can be laser treated either with the same configuration as the one used for the Example 3.
- The T shape corners can be laser treated either with the same configuration as the one used for the yokes or thanks to the rules described in Fig. 13 (left).

Example 5: AC 3-phases transformer made of a squared 8 shaped magnetic circuit with three magnetic columns and two yokes made of I and E shape sheets cut such that the magnetic flux density is along the RD in the column and one yoke (in the two yoks) and along TD in one yoke (in the three columns), and with four L shape corners and two T shape corners. The nominal working condition of the AC 3-phases transformer contains a fundamental at B = 1.7-1.8 T at f=50Hz.

- The middle of both the columns and one yoke (the two yokes) can be laser treated with the same laser configuration as the one used for the Example 4.
- The lasting yoke (three columns) can be laser treated following the rules described in Fig. 13 (left), with F500p12.5v90sp25fr100DL0d3000_1side or 2sides (PPD=51 TW/cm$^2$, CED=710 J/cm$^2$ per side) when made of 0.23 mm thick strips, with F500p14v90sp25fr100DL8d4000_1side or 2 sides (PPD=57 TW/cm$^2$, CED=800 J/cm$^2$ per side) when made of 0.27 mm thick strips and with F500p16v90sp25fr100DL0d5000_1 side or 2sides (PPD=65 TW/cm$^2$, CED=900 J/cm$^2$ per side) when made of 0.30 mm thick strips.
- The L shape corners can be laser treated either with the same configuration as the one used for the Example 4.
- The T shape corners can be laser treated either with the same configuration as the one used for the yokes or thanks to the rules described in Fig. 13 (left).

Example 6: rotating electrical machine constituted of segmented stator and rotor made of laminated segments with yoke parts and teeth, cut such that the magnetic flux density is along the yoke (the middle tooth). The nominal working condition of the electrical machine contains a fundamental at B = 0.75-1.25 T at f=50Hz in the yoke, B = 1.25-1.75 T at f=50Hz in the teeth.

- The yoke part (the teeth) can be laser treated with F500p14v70sp25frl00DL90d3000_1side (PPD=57 TW/cm$^2$, CED=1000 J/cm$^2$) when made of 0.23 mm thick sheets, with F500pl5v70sp25ffl00DL90d4000_lside (PPD=62 TW/cm$^2$, CED=1100 J/cm$^2$) when made of 0.27 mm thick sheets and with F500p17v70sp25frl00DL90d5000_1 side (PPD=70 TW/cm$^2$, CED=1240 J/cm$^2$) when made of 0.30 mm thick sheets.
- The teeth (the yoke part) can be laser treated either with the same configuration as the one used for the yoke part (the teeth), or be laser treated with F500p14v70sp25fr100DL90d1000_1side (PPD=57 TW/cm$^2$, CED=1000 J/cm$^2$) when made of 0.23 mm thick sheets, with F500p15v70sp25fr100DL90d1500_1side (PPD=62 TW/cm$^2$, CED=1100 J/cm$^2$) when made of 0.27 mm thick sheets and with F500p17v70sp25fr100DL90d2000_1 side (PPD=70 TW/cm$^2$, CED=1240 J/cm$^2$) when made of 0.30 mm thick sheets. Another more adapted solution is to apply the rules described in Fig. 13 (left) with the same configurations but corresponding to a code of the type XXXDLθXXX.
- The top of the teeth close to the yoke (areas submitted to rotating fields), can be laser treated with a grid pattern constituted of both the pattern of the yoke part and the pattern of the teeth.

In another embodiment, the process can comprise a laser treatment with both laser scanning lines parallel to the Rolling Direction RD or slightly tilted relative to RD and laser scanning lines parallel to the transverse direction TD so as to make a grid. This pattern might be well adapted for rotating fluxes rather than one directional fluxes in the Rolling Direction RD or in the transverse direction TD, like in electrical machine yokes for example. The lines parallel to the Rolling Direction RD can be applied on another same side than the lines parallel to the transverse direction TD, or all the lines can be applied to the same side.

In yet another embodiment, the laser scanning lines aren't continuous but rather dotted lines. That is to say, the material isn't continuously treated along a scanning line but rather at regularly spaced spots. The control of the depth of the dots can be achieved by stopping the scanning at desired position and let a burst of pulses engrave the dot with a controlled time, *i.e.* a control of the total number of pulses. This laser mode is necessary for materials with relatively small grain size like NGOES and special alloys providing a spot size significantly smaller than the grain size and spot deep enough with a form factor (spot depth over spot width) higher than 1 in order to affect the total thickness of the electrical steel sheet/plate.

In a particular embodiment of the embodiment, the process comprises, before forming the plurality of grooves, choosing a number of passes and/or at least one scanning direction according to at least one of the following criteria : an intended working frequency of the electrical sheet ; an intended working induction flux direction of the electrical sheet ; a target iron loss reduction of the electrical sheet at an indented working frequency and/or an intended working induction field; a target noise reduction of the electrical sheet at an indented working frequency and/or an intended working induction field. The laser pattern and its orientation on the semi-processed electrical/magnetic steel and special alloys depend mainly on the magnetic flux density direction relative to the rolling direction, which in turn depends on the application of the electrical steel sheet. Fig 13a (right) gives the key rules to choose the laser pattern the most adapted to semi-processed electrical steels and ferromagnetic alloys as a function of the magnetic flux density direction.

The following solutions implemented on one prototype are proposed for each typical use-case example before second recrystallisation:

Example 7: current transformer with a ring core magnetic circuit for which the magnetic flux density direction is circular. Each ring can be laser treated before recrystallisation following the rules of Fig. 13a (right) with F500_2p16.7v70sp25fr100DLθd250_concentric_2sides (PPD=68 TW/cm$^2$, CED=1900 J/cm$^2$ per side), i.e., concentric circular lines very close to each other. A specific gradient of magnetic properties along the radius or the circumference can be tailor made with inhomogeneous radial or concentric patterns, as shown in Fig. 13b.

In a particular embodiment, the choice of the laser process parameters, pattern parameters (dots or lines, scanning directions, line spacings ...) and/or number of passes is performed with a processor storing a computer program comprising instructions for choosing at least one laser process parameter and/or at least one pattern parameter (such as dots or lines, scanning directions, line spacings ...) and a number of passes when the computer program receives as input at least one of the following criteria: an intended working frequency of the electrical sheet; an intended working induction flux direction of the electrical sheet; a target iron loss reduction of the electrical sheet at an indented working frequency and/or an intended working induction field and direction; a target noise reduction of the electrical sheet at an indented working frequency and/or an intended working induction field and direction. The invention also deals with such a computer program and a processor implementing such a computer program.

**LIST OF THE REFERENCE SIGNS**

- 20 : laser treatment line
- 21 : spike-like domain
- 22 : lancet 180° in-plane domain
- 23 : 90° out-of-plane closure domain
- 24 : main 180° in plane bar domain
- 51 : Heat affected Zone (HAZ)
- 52 : remelting line
- 53 : remelted droplet

**Claims**

1. Process for manufacturing an electrical steel sheet, the process comprising :

   a- providing a sheet of laminated electrical steel having a first and a second surface, a rolling direction or at least one easy magnetization direction and a characteristic time for heat diffusion;
   b- forming a plurality of grooves on at least one of the first and second surfaces with at least one pass of a pulsed laser, each pass being associated with a scanning direction, the laser having a laser pulse repetition frequency, a pulse duration and emitting a light at a laser wavelength with a peak power density and a cumulative energy density per pass, the process being **characterised in that** :

   i) the laser pulse duration is equal to or less than a heat diffusion characteristic time of the electrical steel;
   ii) the peak power density is more than 50 TW/cm$^2$ or/ and the product between the peak power density and the pulse repetition frequency is more than 5000 TW/cm$^2$/ms.
   iii) the cumulative energy density per laser pass is comprised between ~ 10 J/cm$^2$ and 3500 J/cm$^2$.

2. Process according to claim 1 in which the laser wavelength is less than or equal to 1100 nanometers.

3. Process according to claim 1 or claim 2 in which the laser pulse duration is less than 800 femtoseconds.

4. Process according to any of claims 1 to 3 comprising at least two laser passes.

5. Process according to claim 4 in which at least one laser pass is applied on the first surface and at least one laser pass is applied on the second surface, at least two laser passes being optionally shifted.

6. Process according to any of claims 1 to 5 comprising before b) : choosing a number of passes and/or at least one scanning direction according to at least one of the following criteria : an intended working frequency of the electrical sheet ; an intended working magnetic flux density direction of the electrical sheet ; a target iron loss reduction of the electrical sheet at an indented working frequency and/or an intended working magnetic flux density; a target noise reduction of the electrical sheet at an indented working frequency and/or an intended working magnetic flux density.

7.  Process according to any of claims 1 to 6 in which the scanning direction of at least one laser pass is perpendicular to a direction chosen among the rolling direction, an easy magnetization direction of the electrical steel sheet and an intended working flux density direction or the scanning direction of at least one laser pass is parallel to a hard magnetization direction of the electrical steel sheet or forms an angle with the rolling direction.

8.  Process according to any of claims 1 to 6 in which the scanning direction of at least one laser pass is parallel to or forms an angle smaller than 20° with a direction chosen among the rolling direction, an easy magnetization direction of the electrical steel sheet, a direction perpendicular to a hard magnetization direction of the electrical steel sheet and an intended working flux density direction.

9.  Process according to any of claims 1 to 6 in which at least two laser passes are performed at step b and at least one of the scanning directions of the laser passes is parallel to a transverse direction that is perpendicular to the rolling direction or a hard magnetization direction of the electrical steel sheet and at least one of the scanning directions forms a small angle with the rolling direction or an easy magnetization direction of the electrical steel sheet.

10. Process according to any of claims 1 to 9 comprising at least one treatment after b) chosen among a coating, a thermal annealing for stress releasing and a thermal annealing dedicated to a second recrystallisation for texturization after b).

11. Process according to any of claims 1 to 10 in which the scanning direction of at least one laser pass is chosen as a function of the rolling direction and/or of an easy magnetization direction of the electrical steel sheet and/or of an intended working flux density direction and an ablation pattern along the scanning direction of at least one laser pass is chosen among a line, an interrupted line and dots.

12. Electrical steel sheet obtained by the process according to any of claims 1 to 11.

Fig. 1

Fig.1a)

Fig.1b)

Fig.1c)

Fig. 1d

Typical groove profiles for IRR, SCR, ABL 1 and ABL 2

Fig. 1e

Fig. 2a

Fig. 2b

Fig. 2c

Fig. 3a

IRR

BEFORE IRRADIATION

w = 292 - 305 μm
<w> = 300 μm

Reduction of domains' width w by - 5 to - 10 %

24

20

AFTER IRRADIATION

3 mm

w = 261 – 307 μm
<w> = 284 μm

Fig 3b

Fig 3c

ABL

BEFORE ABLATION

AFTER ABLATION

24

20

3 mm

w = 210 – 315 µm
<w> = 250 µm

Reduction of domains' width w by – 10 to – 20 %

w = 179 – 244 µm
<w> = 218 µm

Fig. 4a

Fig. 4b

EP 4 382 241 A1

41

Fig. 4c

Part of PED $\Rightarrow$ **Pr** $\propto$ $f$**(PPD,Fr)**

APD: Ablation Power Density
Part of PED
$\Rightarrow$ **p** $\propto$ $f$**(Npass,N, $\tau\times$APD/TED)**
Shape factor of groove profile

TED=$\tau\times$TPD : ablation threshold
ABL if PED=$\tau\times$PPD > TED $\approx$ 0,5 J/cm$^2$

PPD > 50 TW/cm$^2$

PPD $\approx$ 50 TW/cm$^2$

PPD < 50 TW/cm$^2$

APD= AED/$\tau$

Top-hat pulse

Pulse clipping

Smaller spot-size

fx$\times$Sp

fx$\times$Sp: actual spot-size ($\mu$m)

PD=ED/$\tau$: Power Density (TW/cm$^2$)

Fig. 5a

Fig. 5b

Fig. 5c

No HAZ – sharp groove edge

91 µm

x500

x50

80 µm

Air voids

Fig. 5d

Fig. 6a

Industrial CWL irradiation | Industrial CWL irradiation + Tth 760°C (neutral atm.) | USPL ablation + Tth 760°C (neutral atm.)

Side 1

Side 2

Fig. 6b

**Impact of PPD & Tth on losses**

ζ = 0,27 mm

Loss variation (%)

-□-impact of (L1+Tth) @<B>50Hz
-◇-impact of (L1+Tth) @1.7T50Hz
-●-Impact of Tth @<B>50Hz
■ impact of (L2+Tth) @<B>50Hz
◆ impact of (L2+Tth) @1.7T50Hz

d = 4 mm
$f_r$ = 100 kHz
CED L1 = 500-800 J.cm$^{-2}$
CED L2 = 1000-1600 J.cm$^{-2}$

PPD or $P_{peak}$ (TW.cm$^{-2}$)

**Impact of fr & Tth on losses**

ζ = 0,27 mm

d = 4 mm
PPD = 55-65 TW.cm$^{-2}$
CED 1 = 500-800 J.cm$^{-2}$
CED 2 = 1000-1600 J.cm$^{-2}$

Loss variation (%)

-□-impact of (L1+Tth) @<B>50Hz
-◇-impact of (L1+Tth) @1.7T50Hz
-●-Impact of Tth @<B>50Hz
■ impact of (L2+Tth) @<B>50Hz
◆ impact of (L2+Tth) @1.7T50Hz

Repetition frequency fr (kHz)

Ref62 (65 TW/cm²)   Ref63 (49 TW/cm²)   Ref64 (32 TW/cm²)   Ref65 (16 TW/cm²)

Side 1

Side 2

effect of ablation at the opposite side as a function of PPD – GOES grade with thickness 0,27 mm

Fig. 7

Groove Depth $p$ $(\mu m)$ vs $CED$ $(J/cm^2)$

Fig. 8a

**Best loss reduction factors v.s. laser pulsed process**

Fig. 8b

**Best loss reduction factor v.s. laser pulsed process**

Fig. 9a

Fig. 9b

**Figure** — Variation of the A-weighted pressure sound level vs Induction at 1,500 Hz. ■ 1 side treatment, ▨ 2 sides treatment] (-2 dB variation is equivalent to a 20% decrease.)

Fig. 10b

Fig 11a

EP 4 382 241 A1

RPT losses@50Hz ABLATION : PPD = 65-69 TW/cm^2

54

Fig. 11b

RPT losses@1T **ABLATION : PPD = 65-69 TW/cm^2**

Fig. 12a

Fig. 12b

Fig. 13a

**Pattern adapted to fully processed magnetic materials after recristallisation**

**Patterns adapted to semi-processed magnetic materials before recristallisation**

1-directionnal flux along RD or EM

$d_1 = d_0 \sin(\theta_1)$

TD or HM

$\theta_1 = 90 + \Theta_1 \ (\perp RD)$
or $\theta_1 = \theta_{HM} \ (// \ HM)$

$\Theta_1 \approx 0°$  RD or EM

TD or HM

$d_0$

$\Theta_1 \approx 0°$  RD or EM

$\theta_1 = \Theta_1 \ (// \ FLux)$

1-directionnal flux close to RD or EM

$d_1 = d_0 \sin(\theta_1)$

TD or HM

$\theta_1 = 90 + \Theta_1 \ (\perp Flux)$

$-15 < \Theta_1 < +15°$

RD or EM

TD or HM

$d_0$

$\theta_1 = \Theta_1 \ (// \ Flux)$

$-180 < \Theta_1 < +180°$  RD or EM

**1-directionnal flux between RD or EM and TD or HM**

$15 < \Theta_1 < +75°$
$-75 < \Theta_2 < -15°$  $\Rightarrow$  $\theta_1 = 90 \ (\perp RD \ or \ EM)$
$\theta_2 = 90 \ (\perp RD \ or \ EM)$

$15 < \Theta_1 < +75°$
$-75 < \Theta_2 < -15°$  $\Rightarrow$  $\theta_1 = \Theta_1 \ (// \ Flux)$
$\theta_2 = \Theta_2 \ (// \ Flux)$

1-directionnal flux close to TD or HM

TD or HM

$d_2 = d_0$
$d_2 = d_0 \sin(\theta_2)$
$\theta_2 = -90 + \Theta_2 \ (\perp Flux)$
$\theta_2 = 90 - \Theta_2 \ (\perp Flux)$

RD or EM

$75 < \Theta_2 < 105°$
$-75 > \Theta_2 > -105°$

$d_0$

TD or HM

RD or EM

$0 < \Theta_2 < 180°$
$0 > \Theta_2 > -180°$
$\theta_2 = \Theta_2 \ (// \ Flux)$

2-dirctionnal rotating flux

TD or HM

$\theta_1$

$\theta_2$

RD or EM

TD

$\theta_2 = \Theta_2$

$\theta_1 = \Theta_1$  RD or EM

Magnetic flux  ———— scanning direction of lines, interrupted lines or dots

$d_0 < g$: laser lines/dots' spacing (pattern pitch or period)
g: max average size of recristallized grains
$\Theta$ [modulo $\pi$]: angle between the magnetic flux and the RD or EM
$\theta$ [modulo $\pi$]: ange between the laser scanning direction and the RD or EM
$\theta_{HM}$ [modulo $\pi$]: ange between HM and RD or EM

Fig. 13b

Innovative laser pattern adapted to ring cores after recrystallization

Innovative laser pattern adapted to ring cores before recrystallization

Homogeneous pattern

inhomogeneous pattern

Magnetic flux direction

**Gradients of magnetic properties**

Fig. 14a

Losses on Fe$_{w50\%}$Co$_{w50\%}$ rings of thickness 0,2 mm laser treated before recristallization v.s. PPD and pattern working at B=0,6T and 1,8T @50Hz

Fig. 14b

Loss variations of Fe$_{w50\%}$Co$_{w50\%}$ rings @50Hz (process TTL1 c)

Permeability changes of Fe$_{w50\%}$Co$_{w50\%}$ rings @50Hz (proc. TTL1 c)

HYSTERESIS loops Comparison for procsss 0TTL & TTL1 c & TTL1 r on special alloy $Fe_{w50\%}Co_{w50\%}$ @B = 1,8T & f = 50Hz

Fig. 14c

Europäisches
Patentamt

European
Patent Office

Office européen
des brevets

## EUROPEAN SEARCH REPORT

Application Number

EP 22 21 2542

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NESSER M ET AL: "Impact of Ultra-Short Pulsed Laser (USPL) Ablation Process on Separated Loss Coefficients of Grain Oriented Electrical Steels", IEEE TRANSACTIONS ON MAGNETICS, IEEE, USA, vol. 58, no. 8, 18 February 2022 (2022-02-18), pages 1-5, XP011915632, ISSN: 0018-9464, DOI: 10.1109/TMAG.2022.3152899 [retrieved on 2022-02-18] | 1-4,6,12 | INV. B23K26/0622 B23K26/364 C21D8/12 H01F1/16 C21D6/00 C21D9/46 |
| Y | * the whole document * | 5,7-11 | |
| X | NESSER M ET AL: "Correlation between laser energetic parameters and magnetic properties of GO laminations under surface treatments with long, short or ultra-short pulsed lasers", JOURNAL OF MAGNETISM AND MAGNETIC MATERIALS, ELSEVIER, AMSTERDAM, NL, vol. 504, 3 March 2020 (2020-03-03), XP086103822, ISSN: 0304-8853, DOI: 10.1016/J.JMMM.2020.166696 [retrieved on 2020-03-03] | 12 | |
| Y | * the whole document * | 7 | TECHNICAL FIELDS SEARCHED (IPC) B23K C21D H01F |
| X,D | EP 3 760 745 A1 (BAOSHAN IRON & STEEL [CN]) 6 January 2021 (2021-01-06) | 12 | |
| Y | * the whole document * | 5,8-11 | |

The present search report has been drawn up for all claims

| Place of search | Date of completion of the search | Examiner |
|---|---|---|
| Munich | 5 July 2023 | Hernanz, Sonsoles |

EPO FORM 1503 03.82 (P04C01)

## ANNEX TO THE EUROPEAN SEARCH REPORT
## ON EUROPEAN PATENT APPLICATION NO.

EP 22 21 2542

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2023

| Patent document cited in search report | | Publication date | Patent family member(s) | | Publication date |
|---|---|---|---|---|---|
| EP 3760745 | A1 | 06-01-2021 | BR | 112020020018 A2 | 05-01-2021 |
| | | | CA | 3096747 A1 | 03-10-2019 |
| | | | CN | 110323044 A | 11-10-2019 |
| | | | EP | 3760745 A1 | 06-01-2021 |
| | | | JP | 7231642 B2 | 01-03-2023 |
| | | | JP | 2021516725 A | 08-07-2021 |
| | | | KR | 20200125704 A | 04-11-2020 |
| | | | RU | 2757364 C1 | 14-10-2021 |
| | | | US | 2021023659 A1 | 28-01-2021 |
| | | | WO | 2019184104 A1 | 03-10-2019 |

EPO FORM P0459

For more details about this annex : see Official Journal of the European Patent Office, No. 12/82

**REFERENCES CITED IN THE DESCRIPTION**

**Patent documents cited in the description**

- EP 3760745 A